# EUROPEAN PATENT SPECIFICATION

(11) **EP 2 424 913 B1**
(45) Date of publication and mention of the grant of the patent: **23.10.2013**
(21) Application number: 10719686.7
(22) Date of filing: 28.04.2010
(51) Int. Cl.: C08G 18/10, C08G 18/32, C08G 18/50, A63B 37/00

(54) **CASTABLE POLYUREA COMPOSITIONS FOR GOLF BALL COVERS**
GIESSBARE POLYHARNSTOFFZUSAMMENSETZUNGEN FÜR GOLFBALLÜBERZÜGE
COMPOSITIONS DE POLYURÉE COULABLE POUR REVÊTEMENTS DE BALLES DE GOLF

(30) Priority: 30.04.2009 US 174193 P
(43) Date of publication of application: 07.03.2012
(73) Proprietor: Dow Global Technologies LLC, Midland, MI 48674 (US)
(72) Inventor: XIE, Rui, Alpharetta GA 30005 (US)
(74) Representative: Raynor, John
(86) International application number: PCT/US2010/032655
(87) International publication number: WO 2010/126931

(56) References cited:
- US-A1- 2005 228 160
- US-B2- 7 481 956

## Description

### 1. Field of the Invention

This present invention is related to polyurea prepolymer compositions and to polyurea and poly(urea-co-urethane) elastomers produced therefrom. Such elastomers are useful in the manufacture of golf balls and golf ball covers.

### 2. Background

Polyurethane elastomers and/or poly (urethane-co-urea) elastomers are widely used in the manufacture of golf balls and golf ball covers. See for example, U.S. Patents 5,334,673, 7,244,384, 7,481,956 and 7,491,787. Polyurethanes allow for the production of the golf ball covers with the feel and click of balata covered balls and provide for greater cut resistance. In addition, the polyurethanes are generally more resilient than balata, allowing balls to be made with good feel and good distance. Another advantageous feature of polyurethane covered balls is shear resistance. Shear resistance measures the damage to a cover from the impact of a club with sharp grooves, which can tear away bit of the cover. In contrast, cut resistance measures the resistance to damage of a cover from a miss-hit shot, where the leading edge of the iron cuts directly into the cover.

Although polyurethane formulations are now known that give both shear resistance and acceptable resilience, while maintaining the click and feel of balata, there are rooms for further improvements in areas of cut and shear resistance and temperature stability.

Polyureas can also be used in the production of golf balls and are the reaction product of polyisocyanates with primary or secondary amine terminated materials. Polyureas are generally superior to polyurethanes in providing cut resistance, shear resistance, temperature resistance, chemical resistance and light stability. However, reactions between polyisocyanates and amines are more than 100 times faster than those between polyisocyanates and hydroxyl terminated materials. Due to the fast reaction speed of amines and isocayantes, polyurea systems have only found commercial values in spray coatings and reaction injection moldings (RIM) instead of low pressure castings that is used in the production of high performance polyurethane elastomers. As a result, most of the modern polyurethane elastomers are based on chemistry of reacting aromatic isocyanates with hydroxy-terminated polyols, which leads to the formation of polyurethane linkage instead of polyurea linkage.

Aliphatic polyisocyanates, such as 4,4'-methylene bis(cyclohexyl) isocyanate (H₁₂MDI), isophorone dlisocyanate (IPDI) and 1,6-hexamethylene diisocyanate (HDI) etc., are less reactive and sometimes can be used to make polyurea elastomers when they are reacted with slower reacting amines, such as sterically hindered aromatic and aliphatic amines. Although polyurea compositions based on these isocyanates possess improved light stability, they are often accompanied by a decrease in the mechanical properties of the materials, which results in poor shear and cut resistance. Generally these polyurea elastomers also require extended postcure at an elevated temperature to complete the reaction of the components and achieve maximum physical properties. Even with the extended cure time, commercial polyureas based on aliphatic polyisocyanates often demonstrate softening (loss of hardness) at moderate temperature. Extended postcure at elevated temperatures can significantly reduce productivity, and softening at elevated temperatures affects play range and spinning of the ball. Thus, both are highly undesirable and should avoid if possible.

On the other hand, aromatic isocyanates, such as toluene diisocyanate (TDI) and diphenylmethane diisocyanate (MDI), are typically more reactive than their aliphatic counterpart. Due to the fast reaction between aromatic isocyanates and polyamines, aromatic polyisocyanates are not a prime candidate for polyurea prepolymer compositions, where vigorous reaction between polyamine and aromatic isocyanates can lead to a run away reaction and cause reactive chemical accidents. As a result, they have generally been dismissed as potential candidates for polyurea prepolymers. As a result, nearly all the prepolymer products in the market today are polyurethane prepolymers, underscoring the challenge of making a polyurea prepolymer.

Therefore, it is desirable to have polyurea systems that have slower reactivity at the front, for example a slow viscosity build-up when the components are mixed, so that the systems can be processed via a casting process, while at the same time possess adequate reactivity at the back end so that the elastomers can reach full performance (maximum physical properties) without the need of postcure at elevated temperatures.

While an all polyurea system is desirable, some polyisocyanate based polyurea systems can be difficult to process via casting due to fast reactivity of the polyisocyanate. In this case, a hydroxy-terminated curing agent may be used to slow down the reaction, resulting in formation of urethane linkages instead of urea linkages. As a result, a poly(urea-co-urethane) elastomer is created.

### SUMMARY OF THE INVENTION

The present invention is generally directed to golf equipment having at least a portion formed of a polyurea composition. In one embodiment, the present invention is directed to one-piece golf balls including polyurea. In another embodiment, the compositions of the invention are used in two-piece and multi-component, e.g., three-piece, four-piece, etc. golf balls Including at least one cover layer and a core, wherein at least one cover layer includes at least one polyurea, as well as multi-component golf balls including cores and/or covers having two or more layers, wherein at least one such layer(s) is formed of at least one polyurea.

More particularly, in one embodiment the present invention is directed to a golf ball comprising a core and a cover, said cover comprising a polyurea elastomer comprising the reaction product of:
at least one amine curing agent with a polyisocyanate composition wherein the polyisocyanate composition comprises
   an isocyanate terminated prepolymer comprising at least one first polyisocyanate with a reactivity greater than that of 4,4'-methylene bis(cyclohexyl) isocyanate and functionality of 1.7 to 2.3 and
   at least one amine-terminated compound having a molecular weight greater than 1000 selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof; and
at least one second polyisocyanate with a vapor pressure lower than 0.01 mmHg (1.3 Pa) at 20°C.

In another embodiment the present invention is directed to a golf ball comprising a core and a cover, said cover comprising a poly(urethane-co-urea) elastomer comprising the reaction product of a hydroxyl curing agent with a polyisocyanate composition wherein the polyisocyanate composition is
an isocyanate terminated prepolymer comprising at least one first polyisocyanate with a reactivity greater than that of 4,4'-methylene bis(cyclohexyl) isocyanate and functionality of 1.7 to 2.2 and at least one amine-terminated compound having a molecular weight greater than 1000 selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof; and
at least one second polyisocyanate with a vapor pressure lower than 0.01 mmHg (1.3 Pa) at 20°C :

In another embodiment, the invention is directed to

A golf ball comprising:
a core;
a layer disposed about ,the core to create an inner ball; and
a cover cast onto the inner ball, wherein the cover comprises a polyurea material comprising the reaction product of at least one amine-terminated curing agent and an amine reactive composition comprising
   an isocyanate terminated prepolymer comprising the reaction product of at least one first polyisocyanate, wherein the polyisocyanate has reactivity greater than that of 1,1'-methylene-bis(4-isocyanatocyclohexane) - and functionality of 1.7 to 2.3, and at least one amine-terminated compound, wherein the amine-terminated compound is selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof;
   and at least one second isocyanate with vapor pressure lower than 0.01 mmHg (1.3 Pa) at 20°C.

In a further embodiment, the present invention is directed to a golf ball comprising:
a core;
a layer disposed about the core to create an inner ball; and
a cover cast onto the inner ball, wherein the cover comprises a poloy(urethane-co-urea) elastomer comprising the reaction product of at least one hydroxyl-terminated curing agent and an isocyanate composition comprising
   an isocyanate terminated prepolymer comprising the reaction product of at least one first polyisocyanate, wherein the polyisocyanate has reactivity greater than that of 4,4'-methylene bis(cyclohexyl) isocyanate and functionality of 17 to 2.3, and at least one amine-terminated compound, wherein the amine-terminated compound is selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof;
   and at least one second isocyanate with vapor pressure lower than 0.01 mmHg (1.3 Pa) at 20°C.

In another embodiment the present invention is to a golf ball an any of the above embodiments wherein the first polyisocyanate has a reactivity greater than that of isophorone diisocyanate (IPDI).

In another aspect, the present invention is directed to a method of making making a golf ball comprising a core and a polyurea or poly(urea-co-urethane) elastomer cover comprising molding around a pre-made core a mixture of:
a polyurea prepolymer comprising
at least one first polyisocyanate monomer with reactivity greater than that of 4,4'-methylene bis(cyclohexyl) isocyanate and functionality of 1.7 to 2.3; and
at least one amine-terminated compound having a molecular weight greater than 1000 and selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof;
at least a second polyisocyanate with vapor pressure lower than 0.01 mmHg (1.3 Pa) at 20°C; and
at least one amine or hydroxyl functional curing agent.

In a further embodiment, the ratio of molar equivalents of curing agent plus poly/polyamine to equivalents of isocyanate in the golf balls described above is in the range of from 0.6:1 to 1.2:1.

The golf ball cover of this invention has good physical properties, such as good resilience, shear resistance, and heat stability equal to or exceed that of the more common polyurethanes and polyureas currently available for use. Surprisingly, the compositions of this invention have a desirable reactivity profile, such as long pot life, short demold time and no postcure at elevated temperatures. These characteristics make the invention suitable for both casting and reaction injection molding.

### DETAILED DESCRIPTION OF THE INVENTION

The present invention relates to polyurea compositions, polyisocyanate mixtures and polyurea and poly(urea-co-urethane) elastomer produced therefrom. The polyurea compositions are isocyanate terminated prepolymers comprise the reaction product of at least one polyisocyanate with reactivity greater than that of 4,4'-methylene bis(cyclohexyl) isocyanate and functionality of 1.7 to 2.3 and at least one amine terminated compound having a molecular weight greater than 1000 and selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof. The polyisocyanate mixtures comprise the polyurea prepolymers mixed with at least one second polyisocyanate with a vapor pressure lower than 0.01 mmHg (1.3 Pa) at 20°C. The polyisocyanate mixtures is reacted with at least one hydroxy or at least one amine functional curing agent (chain extender) to form poly(urea-co-urethane) and polyurea elastomers respectively.

In another embodiment, the polyurea composition is a reaction product of at least one polyisocyanate with reactivity greater than that of 4,4'-methylene bis(cyclohexyl) isocyanate and functionality of 1.7 to 2.3 and at least one amine terminated compound having a molecular weight greater than 1000 and selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof and at least one second polyisocyanate with a vapor pressure lower than 0.01 mmHg (1.3 Pa) at 20°C.

In one embodiment, the curing agent is an aromatic diamine. In a further embodiment, the polyurea composition comprises a polyisocyanate having a reactivity greater than isophorone diiisocyanate.

These polyurea or poly(urea-co-urethane) elastomers, when included into various golf equipments, such as covers, produce golf balls with physical and aerodynamic properties. In addition, these compositions/mixtures in making elastomers possess desired processing characteristics, such as long pot life, short demold time and no need of postcure at elevated temperature, which makes them ideal for standard casting, reaction injection molding and liquid injection molding.

Good performance and processing characteristics rely on careful balance of mechanical properties and reactivity of the polyisocyanates. By judiciously selecting a first polyisocyanates with higher reactivity to react with amine terminated compounds, and then balancing reaction product with a second polyisocyanate having equal or lower reactivity and low vapor pressure, a desired reactivity profile of the mixture is achieved. By tailoring the reactivity of the polyurea systems, one can meet requirements of various processing techniques and ensure full development of physical properties of the polyurea at the processing conditions.

### Polyamine Component

Any amine-terminated compound available to one of ordinary skill in the art is suitable for use in the polyurea prepolymer. The amine-terminated compound may include amine-terminated hydrocarbons, amine-terminated polyethers, amine-terminated polyesters, amine-terminated polycarbonates, amine-terminated polycaprolactones, and mixtures thereof. The amine-terminated segments may be in the form of a primary amine (NH₂) or a secondary amine (NHR).

The molecular weight of the amine-terminated compound for use in the invention may range from 100 to 10,000. As used herein, the term "about" is used in connection with one or more numbers or numerical ranges, should be understood to refer to all such numbers, including all numbers in a range. In one embodiment, the amine-terminated compound is 500 or greater. In other embodiments the amine-terminated compound molecular weight is 1000 or greater, or 2000 or greater. In another embodiment, the amine-terminated compound molecular weight is 8000 or less. In other embodiments the molecular weight is 4,000 or less, or 3,000 or less. For example, in one embodiment, the molecular weight of the amine-terminated compound is 1000 to 4000. Because lower molecular weight polyether amines may be prone to forming solid polyureas, a higher molecular weight oligomer may be used to avoid solid formation.

In one embodiment, the amine-terminated compound Includes amine-terminated hydrocarbons having the following generic structures: 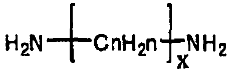 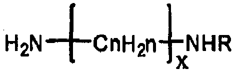 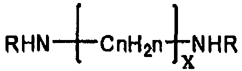 where x is the chain length, i.e., 1 or greater, n is preferably 1 to 12, and R is any alkyl group having from 1 to 20 carbon atoms, preferably 1 to 12 carbon atoms, a phenyl group, a cyclic group, or mixture thereof.

The amine-terminated compound may also include amine-terminated polyethers having following generic structures: 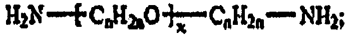 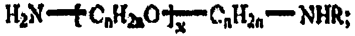 or 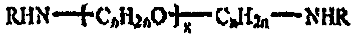 where x is the chain length, i.e., 1 or greater, n is preferably 1 to 12, and R is any alkyl group having from 1 to 20 carbon atoms, preferably 1 to 12 carbon atoms, a phenyl group, a cyclic group, or mixture thereof. One example of an amine-terminated polyether is a polyether amine. As used herein, "polyether amine" refers to a polyoxyalkyleneamine containing primary amino groups attached to the terminus of a polyether backbone. Due to the rapid reaction of isocyanate and amine, and the insolubility of many urea products, however, the selection of diamines and polyether amines is limited to those allowing the successful formation of the polyurea prepolymers. In one embodiment, the polyether backbone is based on tetramethylene, propylene, ethylene, trimethylolpropane, glycerin, and mixtures thereof.

In one embodiment, the polyether amine has the generic structure: 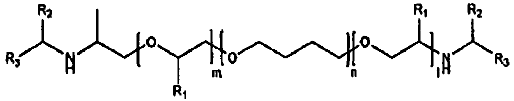 or 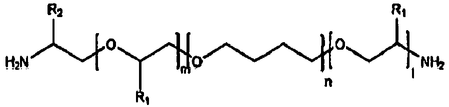 wherein the repeating unit m, n, and I have a value ranging from 1 to 70, R1, R2 and R3 are any alkyl group having from 1 to 20 carbon atoms, preferably 1 to 12 carbon atoms, a phenyl group, a cyclic group, or mixture thereof, and R₃ is a hydrogen, methyl group, or a mixture thereof. Even more preferably, the repeating unit may be from 5 to 50, and even more preferably is from 12 to 35.

In another embodiment, the polyether amine has the generic structure: 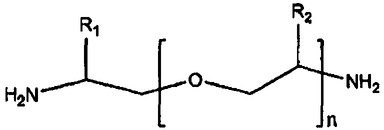 or 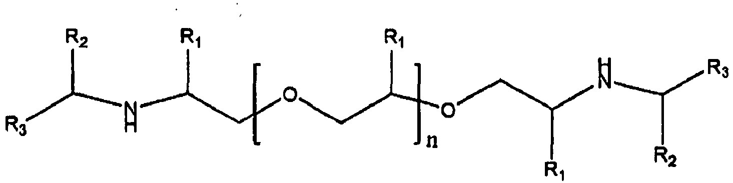 wherein the repeating unit n has value ranging from 1 to 70, R1, R2 and R3 are any alkyl group having from 1 to 20 carbon atoms, preferably 1 to 12 carbon atoms, a phenyl group, a cyclic group, or mixture thereof, and R₃ is a hydrogen, methyl group, or a mixture thereof. Even more preferably, the repeating unit may be from 5 to 50, and even more preferably is from 12 to 35.

Suitable polyether amines include, but are not limited to, methyldiethanolamine; polyoxyalkylenediamines such as, polytetramethylene ether diamines, polyoxypropylenetriamine, polyoxyethylene diamines, and polyoxypropylene diamines; poly(ethylene oxide capped oxypropylene)ether diamines; propylene oxide-based triamines; triethyleneglycoldiamines; trimethylolpropane-based triamines; glycerin-based triamines; and mixtures thereof. In one embodiment, the polyether amine used to form the prepolymer is Jeffamine® SD2001, Jeffamine® XTJ 605, Jeffamine® XTJ 604, Jeffamine® XTJ 605 (Jeffamine is a trademark of Huntsman Corporation).

The molecular weight of the polyether amine for use in the invention may range from 100 to 5000. In one embodiment, the polyether amine molecular weight is 200 or greater, preferably 230 or greater. In another embodiment, the molecular weight of the polyether amine is 4000 or less. In yet another embodiment, the molecular weight of the polyether amine is 600 or greater. In still another embodiment, the molecular weight of the polyether amine is 3000 or less. In yet another embodiment, the molecular weight of the polyether amine is between 1000 and 4000, preferably 1000 to 4000, and more preferably is between 1500 to 2500, Because lower molecular weight polyether amines may be prone to forming solid polyureas during prepolymer preparation, a higher molecular weight oligomer, such as Jeffamine® D2000 or Jeffamine® SD2001, is preferred. In one embodiment, 45% or more by weight of the amine terminated compound has a molecular weight of greater than 1000. In a other embodiments, greater than 50, greater than 58, greater than 64 or greater than 70 wt% of the amine terminated compound has a molecular weight of greater than 1,000.

In addition, the amine-terminated compound may include amine-terminated polyesters having the generic structures: 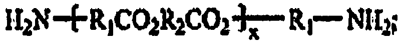 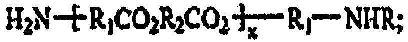 or 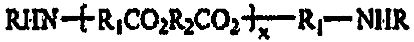 where x is the chain length, i.e., 1 or greater, preferably 1 to 20, R is any alkyl group having from 1 to 20 carbon atoms, preferably 1 to 12 carbon atoms, a phenyl group, a cyclic group, or mixture thereof, and R₁ and R₂ are straight or branched hydrocarbon chains, e.g., alkyl or aryl chains.

Copolymers of polycaprolactone and polyamines may also be used to form the polyurea prepolymers of the present invention. These copolymers include, but are not limited to, bis(2-aminoethyl)ether initiated polycaprolactone, 2-(2-aminoethylamino)ethanol, 2-2(aminoethylamino)ethanol, polyoxyethylene diamine initiated polycaprolactone, propylene diamine initiated polycaprolactone, polyoxypropylene diamine initiated polycaprolactone, 1,4-butanediamine initiated polycaprolactone, trimethylolpropane-based triamine initiated polycaprolactone, neopentyl diamine initiated polycaprolactone, hexanediamine initiated polycaprolactone, polytetramethylene ether diamine initiated polycaprolactone, and mixtures thereof. In addition, polycaprolactone polyamines having the following structures may be useful in forming the polyurea prepolymers of the present invention: 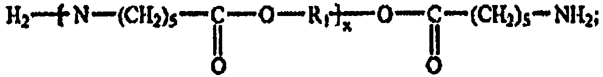 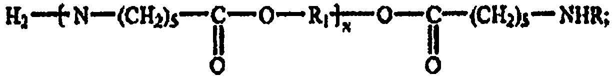 or 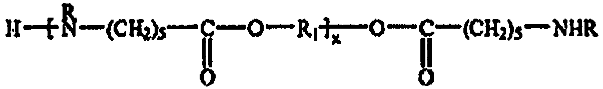 where x is the chain length, i.e., 1 or greater, preferably 1 to 20, R is one of an alkyl group having from 1 to 20 carbons, preferably 1 to 12 carbons, a phenyl group, or a cyclic group, and R₁ is a straight or branched hydrocarbon chain including 1 to 20 carbons.

In another embodiment, the amine-terminated compound may be an amine-terminated polycarbonate having one of the following generic structures: 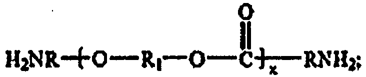 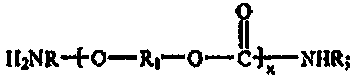 or 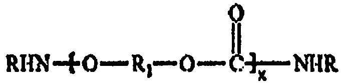 where x is the chain length, which preferably ranges from 1 to 20, R is one of an alkyl group having from 1 to 20 carbons, preferably 1 to 12 carbons, a phenyl group, or a cyclic group, and R₁ is a straight chain hydrocarbon or predominantly bisphenol A units or derivatives thereof.

Amine-terminated polyamides may also be reacted with the isocyanate component to form the polyurea prepolymer component of the present invention. Suitable amine-terminated polyamides include, but are not limited to, those having following structures: 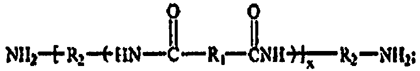 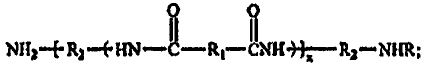 or 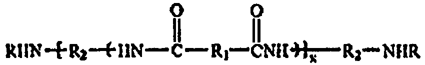 where x is the chain length, i.e., 1 or greater, R is one of an alkyl group having from 1 to 20 carbons, preferably 1 to 12 carbons, a phenyl group, or a cyclic group, R₁ is an alkyl group having 1 to 12 carbon atoms, a phenyl group, or a cyclic group, and R₂ is an alkyl group having 1 to 12 carbon atoms (straight or branched), a phenyl group, or a cyclic group.

Additional amine-terminated compounds may also be useful in forming the polyurea prepolymers of the present invention include, but are not limited to, poly(acrylonitrile-co-butadiene); poly(1,4-butanediol)bis(4-aminobenzoate) in liquid or waxy solid form; linear and branched polyethylenimine; low and high molecular weight polyethylenimine having an average molecular weight of 500 to 30,000; poly(propylene glycol)bis(2-aminopropyl ether) having an average molecular weight of 200 to 5,000; polytetrahydrofuran bis(3-aminopropyl) terminated having an average molecular weight of 200 to 2000; and mixtures thereof, all of which are available from Aldrich.

Thus, in one embodiment, the polyurea composition includes a poly(acrylonitrile-co-butadiene) having one of the following structures: 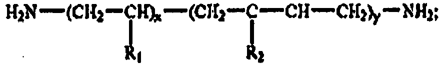 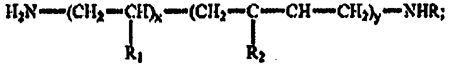 or 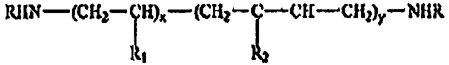 wherein x and y are chain lengths, i.e., greater than 1, R is any alkyl group having from 1 to 20 carbon atoms, preferably 1 to 12 carbon atoms, a phenyl group, a cyclic group, or mixture thereof, R₁ is a hydrogen, methyl group, cyano group, phenyl group, or a mixture thereof, and R₂ is a hydrogen, a methyl group, chloride, or a mixture thereof. In one embodiment, the y:x ratio is 82:18 to 90:10. In other words, the poly(acrylonitrile-co-butadiene) may have from 10 percent to 18 percent acrylonitrile by weight.

In another embodiment, the polyurea composition includes a poly(1,4-butanediol) bis(4-aminobenzoate) having one of the following structures: 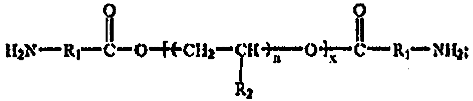 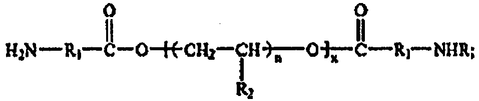 or 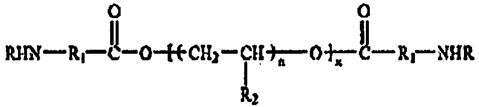 where x and n are chain lengths, i.e., 1 or greater, and n is preferably 1 to 12, R and R₁ are linear or branched hydrocarbon chains, an alkyl group having from 1 to 20 carbons, preferably 1 to 12 carbons, a phenyl group, a cyclic group, or mixtures thereof, and R₂ is a hydrogen, a methyl group, or a mixture thereof. In one embodiment, R₁ is phenyl, R₂ is hydrogen, and n is 2.

In addition, diamines and triamines may be used with the isocyanate to form the polyurea prepolymer. In one embodiment, aromatic diamines may be used when an ultraviolet stabilizer or whitening agent is intended to be incorporated during post processing. Suitable aromatic amines are described, for example, in U.S. Patent 5,484,870. For example, useful aromatic polyamines include polymethylene-di-p-aminobenzoates, polyethyleneglycol-bis(4-aminobenzoate), polytetramethylene etherglycol-di-p-aminobenzoate, polypropyleneglycol-di-p-aminobenzoate, and mixtures thereof. In addition, triamines that may be used in forming the prepolymer of the invention include N,N,N',N'-tetramethyl-ethylenediamine, 1,4-diazobicyclo(2,2,2)-octane, N-methyl-N'-dimethylaminoethylpiperazine, N,N-dimethylbenzylamine, bis-(N,N-diethylaminoethyl)-adipate, N,N-diethylbenzylamine, pentamethyldiethylenetriamine, N,N-dimethylclyclohexylamine, N,N,N',N'-tetramethyl-1,3-butanediamine, N,N-dimethyl-beta-phenylethylamine, 1,2-dimethylimidazole, and 2-methylimidazole.

The amine terminated compounds used in the practice of the present invention have a nominal amine functionality of 1.7 to 6, preferably 2 to 4. While amine terminated compounds with functionality of 2 are generally expected to have improved physical properties, excellent shear resistance can be obtained with higher functionality as well.

By using amine-terminated moieties based on a hydrophobic segment, the polyurea compositions of the invention may be more water resistant than those polyurea compositions formed with an amine-terminated hydrophilic segment. Thus, in one embodiment, the amine-terminated compound includes hydrophobic backbone, e.g., an unsaturated or saturated hydrocarbon-based amine-terminated compound. One example of an amine-terminated hydrocarbon is an amine-terminated polybutadiene.

The amine-terminated compound may also be blended with additional polyols to formulate copolymers that are reacted with excess isocyanate to form the polyurea prepolymer. Once a polyol is used, however, the excess isocyanate in the polyurea prepolymer reacts with the hydroxyl groups in the polyol and forms urethane linkages, which results in a composition that is no longer pure polyurea, but instead a polyurea/urethane composition. Such a composition is distinct from a polyurea composition including only isocyanate, an amine-terminated compound, and a curing agent.

### Isocyanate Component

For producing the polyurea and poly(curethane-co-urea) elastomers described herein, at least one first polyisocyanate is used which has a reactivity greater than 4,4'-dicyclohexylmethane diisocyanate (H₁₂MDI), In a further embodiment, the first isocyanate has a reactivity greater than isophorone diisocyanate (IPDI). Such reactivity can be readily determined by those skilled in the art by measuring the disappearance of free isocyanate (NCO) versus an isocyanate reactive component. Such measurements may be done in the presence or absence of a urea or urethane promoting catalyst. An example of such a reactivity determination is given herein under the heading of Reactivity Studies.

In one embodiment, when the first polyisocyanate is used in making a polyurea prepolymer, any second polyisocyanate will have a reactivity different than that of the prepolymer. Thus the first and second polyisocyanate may be the same whereby the reactivity of the prepolymer will be different than the polyisocyanate monomer. In a further embodiment, when using a one-shot process, whereby a first and second polyisocyanate are present for reaction with an amine terminated compound, the first and second isocyanate will have different reactivities.

In a further embodiment, when an aliphatic polyisocyanate or derivatives thereof is used, the functionality of the aliphatic polyisocyanate will generally be from 1.7 to 2.3. Thus such a mixture may contain monomers, dimers and higher oligomers provided the overall functionality of the isocyanate is less than 2.4. In another embodiment, when an aromatic polyisocyanate is used, the aromatic polyisocyanate will generally have a functionality of 1.7 to 2.3.

When a second polyisocyanate is used, which is not used in the formation of a prepolymer, such polyisocyanate generally has a vapor pressure of less than 0.01 mmHg (1.3 Pa) at 20°C. In a further embodiment, the polyisocyanate has a vapor pressure less than 0.008, less than 0.007 or less than 0.006 mmHg (0.8 Pa) at 20°C. Polyisocyanates which may be used include aliphatic, cycloaliphatic, aromatic aliphatic, aromatic, any derivatives thereof, and combinations of these compounds having two or more isocyanate (NCO) groups per molecule wherein such polyisocyanates meet the conditions stated above. As used herein, aromatic aliphatic compounds should be understood as those containing an aromatic ring, wherein the isocyanate group is not directly bonded to the ring. One example of an aromatic aliphatic compound is a tetramethylene diisocyanate (TMXDI).

Suitable isocyanate-containing components include diisocyanates having the generic structure: O=C=N-R-N=C=O, where R is a cyclic, aromatic, or linear or branched hydrocarbon moiety containing from 1 to 20 carbon atoms. The isocyanate may also contain one or more cyclic groups or one or more phenyl groups. When multiple cyclic or aromatic groups are present, linear and/or branched hydrocarbons containing from 1 to 10 carbon atoms can be present as spacers between the cyclic or aromatic groups. In some cases, the cyclic or aromatic group(s) may be substituted at the 2-, 3-, and/or 4-positions, or at the ortho-, meta-, and/or para-positions, respectively. Substituted groups may include, but are not limited to, halogens, primary, secondary, or tertiary hydrocarbon groups, or a mixture thereof.

Examples of aromatic isocyanates include substituted and isomeric mixtures including 2,2'-, 2,4'-, and 4,4'-diphenylmethane diisocyanate (MDI); 3,3'-dimethyl-4,4'-biphenylene diisocyanate (TODI); toluene diisocyanate (TDI); carbodiimide-modified liquid 4,4'-diphenylmethane diisocyanate; para-phenylene diisocyanate (PPDI); metaphenylene diisocyanate (MPDI); triphenyl methane-4,4'- and triphenyl methane-4,4"-triisocyanate; naphthylene-1,5-diisocyanate: 2,4'-, 4,4'-, and 2,2-biphenyl diisocyanate; polyphenylene polymethylene polyisocyanate (PMDI) (also known as polymeric PMDI); mixtures of MDI and PMDI; mixtures of PMDI and TDI.

When forming a saturated polyurea prepolymer, the following are examples of saturated isocyanates which may be used, ethylene diisocyanate; propylene-1,2-diisocyanate; tetramethylene-1,2-diisocyanate; tetramethylene-1,3-diisocyanate; tetramethylene-1,4-diisocyanate; 1,3- 1,4-bis(isocyanatomethyl) cyclohexane and mixtures of the two isomers, 1,6-hexamethylene diisocyanate (HDI); octamethylene diisocyanate; decamethylene diisocyanate; 2,2,4-trimethylhexamethylene diisocyanate; 2,4,4-trimethylhexamethylene diisocyanate; dodecane-1,12-diisocyanate;; cyclobutane-1,3-diisocyanate; cyclohexane-1,2-diisocyanate; cyclohexane-1,3-diisocyanate; cyclohexane-1,4-diisocyanate; methylcyclohexylene diisocyanate (HTDI); 2,4-methylcyclohexane diisocyanate; 2,6-methylcyclohexane diisocyanate; 4,4'-dicyclohexyl diisocyanate; 2,4'-dicyclohexyl diisocyanate; 1,3,5-cyclohexane triisocyanate; isocyanatomethylcyclohexane isocyanate; 1-isocyanato-3,3,5-trimethyl-5-isocyanatomethylcyclohexane; isocyanatoethylcyclohexane isocyanate; bis(isocyanatomethyl)-cyclohexane diisocyanate; 4,4'-bis(isocyanatomethyl)dicyclohexane: 2,4'-bis(isocyanatomethyl)dicyclohexane; isophorone diisocyanate (IPDI); triisocyanate of HDI; triisocyanate of 2,2,4-trimethyl-1,6-hexane diisocyanate (TMDI); 4,4'-dicyclohexylmethane diisocyanate (H₁₂MDI); 2,4-hexahydrotoluene diisocyanate; 2,6-hexahydrotoluene diisocyanate; 1,2-, 1,3-, and 1,4-phenylene diisocyanate.

Examples of aromatic aliphatic isocyanate which may be used include 1,2-, 1,3-, and 1,4-xylene diisocyanate; meta-tetramethylxylene diisocyanate (m-TMXDI); paratetramethylxylene diisocyanate (p-TMXDI).

Trimerized isocyanurate of any polyisocyanate, such as isocyanurate of toluene diisocyanate, trimer of diphenylmethane diisocyanate, trimer of tetramethylxylene diisocyanate, isocyanurate of hexamethylene diisocyanate, and mixtures thereof; dimerized uretidione or uretoneimine of any polyisocyanate, such as uretidione or uretoneimine of toluene diisocyanate, uretidione or uretoneimine of hexamethylene diisocyanate, and mixtures thereof; modified polylsocyanate derived from the above isocyanates and polyisocyanates; and mixtures thereof.

In one embodiment, the first polyisocyanate is at least one aromatic polyisocyanate. In a further embodiment the aromatic isocyanate is MDI, TDI, derivatives thereof or mixtures thereof.

In another embodiment the first polyisocyanate is at least one aliphatic isocyanate. In another embodiment the aliphatic isocyanate is HDI, bis(isocyanatomethyl) cyclohexane, derivatives thereof or combinations thereof.

In one embodiment, the second polyisocyanate is at least one aromatic polyisocyanate. In a further embodiment the aromatic polyisocyanate is MDI, or a derivative thereof.

In another embodiment the second polyisocyanate is at least one aliphatic polyisocyanate or a derivative thereof. In another embodiment the aliphatic isocyanate is a derivative of HDI (such as dimer/trimer), derivatives of bis(isocyanatomethyl) cyclohexane, such as dimer/trimer or a mixture thereof.

In another embodiment the first polyisocyanate is at least one aromatic polyisocyanate and the second polyisocyanate is a derivative of at least one aliphatic isocyanate, for example dimer/trimer derivatives, In further embodiment the first polyisocyanate is MDI, TDI, derivatives thereof or mixtures thereof and the second polyisocyanate is aliphatic isocyanate is a derivative of HDI, such dimer/timer, bis(isocyanatomethyl) cyclohexane, derivatives or combinations thereof.

In one embodiment, the first polyisocyanate will be is para-phenylene diisocyanate (PPDI); tolidene diisocyanate (TODI);; 4,4'-methylene bis (phenylisocyanate) (4,4'-MDI); 2,4'-methylene bis (phenylisocyanate) (2,4'-MDI), toluene-2,4-diisocyanate (2,4-TDI); toluene-2,6-diisocyanate (2,6-TDI); naphthalene-1,5-diisocyanate (NDI); 1,3-and 1,4-xylene diisocyanates; 1,6-hexamethylene diisocyanate (HDI); 1,3-cyclohexyl diisocyanate; 1,4-cyclohexyl diisocyanate (CHDI); 1,4-bis(isocyanatomethyl)cyclohexane, 1,3-bis(isocyanatomethyl)cyclohexane, uretdione of HDI dimmer, uretdione of 1,4- bis(isocyanatomethyl)cyclohexane and 1,3-bis(isocyanatomethyl)cyclohexane, or mixtures thereof. In another embodiment, the second isocyanate is 4,4'-methylene bis (phenylisocyanate) (4,4'-MDI), 2,4'-methylene bis (phenylisocyanate) (2,4'-MDI), 4,4'-dicyclohexylmethane diisocyanate (H₁₂MDI), polyphenylene polymethylene polyisocyanate (PMDI), uretonimine thereof, uretidione of HDI and trimerized isocyanurate of HDI, trimerized isocyanurate of 1,3-bis(isocyanatomethyl)cyclohexane, uretidione of 1,3-bis(isocyanatomethyl)cyclohexane, uretidione of 1,4-bis(isocyanatomethyl)cyclohexane, trimerized isocyanurate of 1,4-bis(isocyanatomethyl)cyclohexane, uretidione and trimerized isocyanurate of mixture of 1,3-bis(isocyanatomethyl)cyclohexane 1,4-bis(isocyanatomethyl)cyclohexane or a mixture thererof.

In forming a polyurea prepolymer, it is desired to have at least one first polyisocyanate whose reactivity is greater than that of H12MDI and in a further embodiment greater than (IPDI) and functionality is 1.7 to 2.3, and to react the polyisocyanate with at least one amine terminated compound. This ensures the reaction product, a polyurea prepolymer has adequate reactivity to develop full physical properties at processing conditions when it is chain extended by amine curatives.

In preparing a polyurea prepolymer, an organic polyisocyanate monomer can be employed in a stoichiometric excess of the polyisocyanate monomer in relation to the polyamine, for example, an NCO:NH2 ratio greater than 1:1, usually 2:1 or greater. The use of such an excess of polyisocyanate monomer can produce a prepolymer with a more regular molecular structure having a much narrower molecular weight distribution, which enhances resilience of elastomers. However, when TDI or other isocyanates with high vapor pressure is used, some of the polyisocyanates can be volatile due to high vapor pressure. As in processing, adequate ventilation may not always be present, the removal of the unreacted polyisocyanate monomers in the prepolymer reaction products is beneficial.

Removal of unreacted polyisocyanate monomer is well known in the art, see for example U.S. Patents 4,061,62; 4,182,825; 4,385,171; 4,288.577, 4,888,442 and U.K. Patent 1,101,410. After reacting the polyisocyanate with the amine terminated compounds, the unreacted polyisocyanate may, if desired, be reduced to less than 1% and, preferably, to less than 0.1%, of the reaction mixture. Such removal can be effected, for example, by distillation, generally conducted in agitated thin-film distillation equipment, also known as thin film evaporators, wiped film evaporators, short-path distillers. Removal of the unreacted polyisocyanate results in a prepolymer that is safer to handle owing to the reduced risk of exposure to the vapor and has been found herein to give extended pot life and a final cured part that has substantial improvements in resilience and clarity.

The actual temperature and pressure conditions of the distillation should be such that the vaporization point of the diisocyanate monomer is exceeded without decomposing the polyurethane prepolymer. The actual temperature and pressure can vary, therefore, and are dependent upon the diisocyanate monomer being removed, the polyurethane prepolymer, other components of the polyurethane prepolymer reaction product mixture, etc.

The distillation can be carried out batchwise, semi-continuously, or continuously. Usually, short residence times are preferable. Preferred residence times can range from 10 seconds to 5 minutes.

In the preparation of the polyurea elastomers the polyisocyanate monomers are preferably reacted with long chain (high molecular weight) amine terminated compounds, as described above, to produce polyurea prepolymers containing terminal isocyanate groups that are then chain extended with short chain (low molecular weight) amine or hydroxy functional chain extenders, described herein as a curative, to form the polyurea or poly(urea-co-urethane) elastomers. The long chain, high molecular weight amine terminated compounds provides flexibility and elastomeric properties to the resin, while the low molecular weight chain extender adds toughness and rigidity to the resulting elastomeric polymer. Alternatively, the polyisocyanate monomer, amine terminated compound, and chain extender components can be reacted at the same time, or a portion of the amine terminated compounds can be prereacted with the polyisocyanate monomer, leaving the remaining amine terminated compounds to be reacted together with the chain extender.

Due to use of the high molecular weight amine terminated compounds and the desire to keep the residue free isocyanate monomer in the prepolymer as low as possible by way of formulating and/or stripping, the polyurea prepolymers normally have a low NCO content. In one embodiment the amount of free isocyanate monomer is less than 0.8 wt%. In further embodiments the amount of free monomer is less than, 0.6, less than 0.4, less than 0.25 or less than 0.1 wt%. The NCO content of prepolymer is generally from 2 to less than 10 wt%. In a further embodiment, the NCO content of the prepolymer is less than 8 wt%. As a result, a polyurea elastomer directly from the prepolymers may not yield sufficient hardness for the golf ball cover application. A second polyioscyanate that has low vapor pressure and adequate reactivity is thus desired to be back blended into the prepolymer product, to raise the NCO content of the mixture while maintaining low vapor pressure and desired reactivity profile. Alternatively, the second polyisocyanate can be mixed with the first polyisocyanate, and then the mixture of the isocyanates reacted with the amine terminated compounds.

Several techniques have been described in the art as useful for reducing the amount of polyisocyanate monomer in the prepolymer reaction product mixture. For example, U.K. Patent No. 1,101,410 and U.S. Pat. No. 4,182,825 describe a process for distilling the polyurethane prepolymer reaction product under vacuum conditions to reduce the amount of diisocyanate. U. S. Pat. No. 4,061,662 describes a process for the removal of unreacted toluene diisocyanate from prepolymers by passing the prepolymer reaction product through a column containing a molecular sieve. U.S. Pat. No. 4, 385,171 describes a method for the removal of unreacted diisocyanate from polyurethane prepolymers by codistilling the prepolymer reaction product with a compound that boils at a temperature greater than the boiling point of the diisocyanate. U.S. Pat. No. 4,888,442 describes a two-step process consisting of a first step of distilling the prepolymer reaction product to remove the bulk of the diisocyanate and then, in the second step, adding a solvent to the distilled prepolymer reaction product and passing the resultant mixture through an agitated thin-film evaporator. U.S. Pat. No. 4,288, 577 describes the removal of unreacted methylene bis(4-phenyl isocyanate) (MDI) via solvent extraction with hexane.

The procedures described above relate to reduction of such diisocyanate compounds as toluene diisocyanate (TDI), methylene-bis-(4-phenyl) isocyanate (MDI), and the like in polyurethane prepolymer products. As removal of polyisocyantes via distillation has to be done at elevated temperature, it is critical to maintain heat stability of the product as excess heat can induce further reaction and cause NCO loss and increase of viscosity. Heat stability of polyurethane prepolymers can be improved by adding antioxidants and /or acidifying the prepolymer product. However, in the case of polyurea prepolymers, although addition of antioxidants might be useful, acidifying is not producing good results due to bacisity of the polyamines.

### Curatives

The polyurea composition can be formed by crosslinking the polyurea prepolymer with a single curing agent or a blend of curing agents. The chain extender, employed in the practice of the present invention is a hydroxyl or amine functional chain extender.

In one embodiment the curing agent is an amine-terminated curing agentin a further embodiment the curing agent is a secondary diamine curing agent. Suitable amine-terminated curing agents include, but are not limited to, ethylene diamine; hexamethylene diamine; 1-methyl-2,6-cyclohexyl diamine; 2,2,4- and 2,4,4-trimethyl-1,6-hexanediamine; 4,4'-bis-(sec-butylamino)-dicyclohexylmethane and derivatives thereof; 1,4-bis-(sec-butylamino)-cyclohexane; 1,2-bis-(sec-butylamino)-cyclohexane; 4,4'-dicyclohexylmethane diamine; 1,4-cyclohexane-bis-(methylamine); 1,3-cyclohexane-bis-(methylamine); diethylene glycol bis-(aminopropyl)ether; 2-methylpentamethylene-diamine; diaminocyclohexane; diethylene triamine; triethylene tetr amine; tetraethylene pentamine; propylene diamine; 1,3-diaminopropane; dimethylamino propylamine; diethylamino propylamine; imido-bis-(propylamine); monoethanolamine, diethanolamine; triethanolamine; monoisopropanolamine, diisopropanolamine; isophoronediamine; 4,4'-methylenebis-(2-chloroaniline); 3,5-dimethylthio-2,4-toluenediamine; 3,5-dimethylthio-2,6-toluenediamine; 3,5-diethylthio-2,4-toluenediamine; 3,5-diethylthio-2,6-toluenediamine; 4,4'-bis-(sec-butylamino)-diphenylmethane and derivatives thereof; 1,4-bis-(sec-butylamino)-benzene; 1,2-bis-(sec-butylamino)-benzene; N,N'-dialkylamino-diphenylmethane; trimethyleneglycol-dip-aminobenzoate; polytetramethyleneoxide-di-p-aminobenzoate; 4,4'-methylenebis-(3-chloro-2,6-diethyleneaniline); 4,4'-methylenebis-(2,6-diethylaniline); meta-phenylenediamine; paraphenylenediamine; N,N'-diisopropyl-isophoronediamine; polyoxypropylene diamine; propylene oxide-based triamine; 3,3'-dimethyl-4,4'-diaminocyclohexylmethane; and mixtures thereof. In one embodiment, the amine-terminated curing agent may have a molecular weight of 64 or greater. In another embodiment, the molecular weight of the amine-curing agent is 2000 or less. In addition, any of the amine-terminated moieties listed above may be used as curing agents to react with the polyurea prepolymers.

Saturated amine-terminated curing agents suitable for use with the present invention include, but are not limited to, ethylene diamine; hexamethylene diamine; 1-methyl-2,6-cyclohexyl diamine; 2,2,4- and 2,4,4-trimethyl-1,6-hexanediamine; 4,4'-bis-(sec-butylamino)-dicyclohexylmethane; 1,4-bis-(sec-butylamino)-cyclohexane; 1,2-bis-(sec-butylamino)-cyclohexane; derivatives of 4,4'-bis-(sec-butylamino)-dicyclohexylmethane; 4,4'-dicyclohexylmethane diamine; 1,4-cyclohexane-bis-(methylamine); 1,3-cyclohexane-bis-(methylamine); diethylene glycol bis-(aminopropyl) ether; 2-methylpentamethylene-diamine; diaminocyclohexane; diethylene triamine; triethylene tetramine; tetraethylene pentamine; propylene diamine; 1,3-diaminopropane; dimethylamino propylamine; diethylamino propylamine; imido-bis-(propylamine); monoethanolamine, diethanolamine; triethanolamine; monoisopropanolamine, diisopropanolamine; isophoronediamine; and mixtures thereof.

In one embodiment the amine functional chain extender is an alkylated aromatic diamine, preferably an alkylated toluene diamine (alkylated TDA) or alkylated methylene dianiline (alkylated MDA). The alkyl groups of these aromatic diamines are preferably of from 1 to 20 carbon atoms, more preferably, 1 to 6 carbon atoms.

In another embodiment the alkylated TDA is a mixture of 3,5-diethyl-2,4 toluenediamine and 3,5-diethyl-2,6 toluenediamine (DETDA). Particularly useful is Ethacure 100LC, a low color version available from Albemarle, Inc. Other suitable alkylated aromatic diamines are listed in U.S. Pat. No. 4, 631,298, such as, 2,4,6-triethyl-m-phenylenediamine (TEMPDA); 3,5-diisopropyl-2,4-diaminotoluene; 3,5-di-sec-butyl-2,6-diaminotoluene; 3-ethyl-5-isopropyl-2,4-diaminotoluene; 4,6-diisopropyl-m-phenylenediamine; 4,6-di-tert-butyl-m-phenylenediamine; 4,6-diethyl-m-phenylenediamine; 3-isopropyl-2,6-diaminotoluene; 5-isopropyl-2,4-diaminotoluene; 4-isopropyl-6-methyl-m-phenylenediarnine; 4-isopropyl-6-tert-butyl-m-phenylenediamine; 4-ethyl-6-isopropyl-m-phenylenediamine; 4-methyl-6-tert-butyl-m-phenylenediamine; 4,6-di-sec-butyl-m-phenylenediamine; 4-ethyl-6-tert-butyl-m-phenylenediamine; 4-ethyl-6-sec-butyl-m-phenylenediamine; 4-ethyl-6-isobutyl-m-phenylenediamine; 4-isopropyl-6-isobutyl-m-phenylenediamine; 4-isopropyl-6-sec-butyl-m-phenylenediamine; 4-tert-butyl-6-isobutyl-m-phenylenediamine; 4-cyclopentyl-6-ethyl-m-phenylenediamine; 4-cyclohexyl-6-isopropyl-m-phenylenediamine; 4,6-dicyclopentyl-m-phenylenediamine; 2, 2',6,6'-tetraethyl-4,4'-methylenebisaniline; 2,2',6,6'-tetraisopropyl-4, 4'-methylenebisaniline (methylenebis diisopropylaniline); 2,2',6,6'-tetra-sec-butyl-4,4'-methylenebisaniline; 2,2'-dimethyl-6,6'-di-tert-butyl-4,4'-methylenebisanillne; 2,2'-di-tert-butyl-4,4'-methylenebisaniline; 2-isopropyl-2',6'-diethyl-4,4'-methylenebisaniline; and the like.

When MDI is employed as an isocyanate rather than TDI, the alkylated TDA type chain extenders described above will give very short pot lives, suitable for RIM or LIM type systems. If longer pot lives are desired, such as for compression molding, hydroxy functional chain extenders, slower aromatic diamines or hindered aliphatic secondary diamine may be can be used. Examples of suitable slower aromatic diamines include 4,4'-methylenebischloroanaline (MOCA), 4,4'-methylenebischloro-2,6diethylanaline (MCDEA), 1,3-propanediol bis(4-aminobenzoate), dimethylthio-2,4-toluenediamine and dimethylthio-2,6-toluenediamine (DMTDA, commercially available as a mixture of these isomers), polytetramethyleneoxidebis-4,4'-aminobenzoate, 4-chloro-3,5-diaminobenzoic acid isobutyl ester, 4,4'-bis(sec-butylamino)diphenylmethane (Unilink® 4200), 4,4'-bis-(sec-butylamino)-dicyclohexylmethane (Clearlink® 1000), N,N'-diisopropyl-isophorone diamine, available from Huntsman Corporation under the tradename Jefflink, and the like. In one embodiment, the curing agent is dimethylthio-2,4-toluenediamine and dimethylthio-2,6-toluenediamine.

The curing agent of the invention may be modified with a freezing point depressing agent to create a curative blend with a slower onset of solidification and with storage stable pigment dispersion. A number of amine-terminated curing agents have relatively high freezing points, e.g., hexamethylene diamine (105.8° F.), diethanolamine (82.4° F.), triethanol amine (69.8° F.), diisopropanolamine (73.4° F.), and triisopropanolamine (111.2° F.). Such amine-terminated curing agents may be modified with an amine-terminated freezing point depressing agent or a mixture of amine-terminated freezing point depressing agents. Suitable amine-terminated freezing point depressing agents include, but are not limited to, ethylene diamine, 1,3-diaminopropane, dimethylamino propylamine, tetraethylene pentamine, 1,2-propylenediamine, diethylaminopropylamine, 2,2,4-trimethyl-1,6-hexanediamine, 2,4,4-trimethyl-1,6-hexanediamine, and mixtures thereof.

The freezing point depressing agent is generally added in an amount sufficient to reduce the freezing point of the curing agent by a suitable amount to prevent loss of pigment dispersion, but not affect the physical properties of the golf ball. In one embodiment, the freezing point depressing agent is added to the curing agent in an amount of 5 percent or greater by weight of the curative blend, i.e., curing agent(s), freezing point depressing agent. In another embodiment, the freezing point depressing agent is present in an amount of 8 percent greater by weight of the curative blend. In still another embodiment, the freezing point depressing agent is present in an amount of 10 percent or greater. In yet another embodiment, the curative blend includes the freezing point depressing agent in an amount of 12 percent or greater by weight of the curative blend. The curative blend may also include a freezing point depressing agent in an amount of 14 percent or greater by weight of the curative blend.

In addition, after freezing and subsequent thawing, the modified curative blend preferably has a pigment dispersion of greater than 0 on the Hegman scale, preferably 1 or greater, and more preferably 2 or greater. In one embodiment, the modified curative blend after a freeze/thaw cycle has a pigment dispersion of 3 or greater on the Hegman scale. In another embodiment, the modified curative blend after a freeze and thaw is 4 or greater on the Hegman scale, preferably 5 or greater. In still another embodiment, the modified curative blend after a freeze and thaw is 6 or greater on the Hegman scale. In yet another embodiment, the modified curative blend after freezing and thawing is 7 or greater on the Hegman scale.

To further improve the shear resistance and heat resistance of the resulting polyurea elastomers, a multi-functional curing agent can be used to help improve cross-linking. In one embodiment , the multi-functional curing agent is modified with a compatible freezing point depressing agent. For example, a triol such as trimethylolpropane or a tetraol such as N,N, N',N'-tetrakis(2-hydroxylpropyl) ethylenediamine may be added to the composition. In one embodiment, a primary diamine, such as 3,3'-dimethyl-4,4'-diaminodicyclohexylmethane or 4,4'-diaminodicyclohexylmethane is added to the polyurea composition. Useful triamine curing agents for improving the crosslinking of polyurea elastomers include, but are not limited to: propylene oxide-based triamines; trimethylolpropane-based triamines; glycerin-based triamines; N,N-bis {2-[(aminocarbonyl)amino]ethyl}-urea; N,N',N"-tris(2-aminoethyl)-methanetriamine; N1-(5-aminopentyl)-1,2,6-hexanetriamine; 1,1,2-ethanetriamine; N,N',N"-tris(3-aminopropyl)-methanetriamine; N1-(2-aminoethyl)-1,2,6-hexanetriamine; N1-(10-aminodecyl)-1,2,6-hexanetriamine; 1,9,18-octadecanetriamine; 4,10,16,22-tetraazapentacosane-1,13,25-triamine; N1-{3-[[4-[(3-aminopropyl) amino]butyl]amino]propyl}-1,2,6-hexanetriamine; di-9-octadecenyl-(Z,Z)-1,2,3-propanetriamine; 1,4,8-octanetriamine; 1,5,9-nonanetriamine; 1,9,10-octadecanetriamine; 1,4,7-heptanetriamine; 1,5,10-decanetriamine; 1,8,17-heptadecanetriamine; 1,2,4-butanetriamine; propanetriamine; 1,3,5-pentanetriamine; N1-{3-[[4-((3-aminopropyl) amino]butyl]amino]propyl}-1,2,6-hexanetriamine; N1-{4-[(3-aminopropyl) amino]butyl}-1,2,6-hexanetriamine; 2,5-dimethyl-1,4,7-heptanetriamine; N1-(6-aminohexyl)-1,2,6-hexanetriamine; 6-ethyl-3,9-dimethyl-3,6,9-undecanetriamine; 1,5,11-undecanetriamine; 1,6,11-undecanetriamine; N,N-bis(aminomethyl)-methanediamine; N,N-bis(2-aminoethyl)-1,3-propanediamine; methanetriamine; N1-(2-aminoethyl)-N-2-(3-aminopropyl)-1,2,5-pentanetriamine; N1-(2-aminoethyl)-1,2,6-hexanetriamine; 2,6,11-trimethyl-2,6,11-dodecanetriamine; 1,1,3-propanetriamine; 6-(aminomethyl)-1,4,9-nonanetriamine; 1,2,6-hexanetriamine; N2-(2-aminoethyl)-1,1,2-ethanetriamine; 1,3,6-hexanetriamine; N,N-bis(2-aminoethyl)-1,2-ethanediamine; 3-(aminomethyl)-1,2,4-butanetriamine; 1,1,1-ethanetriamine; N1,N1-bis(2-aminoethyl)1,2-propanediamine; 1,2,3-propanetriamine; 2-methyl-1,2,3-propanetriamine; and mixtures thereof.

In addition, the polyurea prepolymer may be cured with a single hydroxy-terminated curing agent or a mixture of hydroxy-terminated curing agents. Once a hydroxy-terminated curing agent is used, however, the excess isocyanate in the polyurea prepolymer reacts with the hydroxyl groups in the curing agent and forms urethane linkages, which results in a composition that is no longer pure polyurea, but instead a polyurealurethane composition.

As used herein, a pure polyurea composition, i.e., a polyurea/urea, contains only urea linkages having the following general structure: 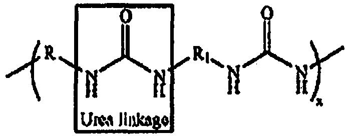 where x is the chain length, i.e., 1 or greater, and R and R₁ are straight chain or branched hydrocarbon chain having 1 to 20 carbons. On the other hand, a polyurea/urethane composition contains both urea and urethane linkages, wherein the urethane linkages have the following general structure: 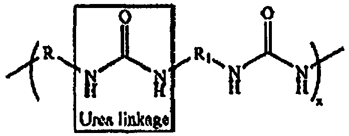 where x is the chain length, i.e., 1 or greater, and R and R₁ are straight chain or branched hydrocarbon chain having 1 to 20 carbons.

Suitable hydroxy-terminated curing agents include, but are not limited to, ethylene glycol; diethylene glycol; polyethylene glycol; propylene glycol; 2-methyl-1,3-propanediol; 2,-methyl-1,4-butanediol; dipropylene glycol; polypropylene glycol; 1,2-butanediol; 1,3-butanediol; 1,4-butanediol; 2,3-butanediol; 2,3-dimethyl-2,3-butanediol; trimethylolpropane; cyclohexyldimethylol; triisopropanolamine; N,N,N'N'-tetra-(2-hydroxypropyl)-ethylene diamine; diethylene glycol bis-(aminopropyl)ether; 1,5-pentanediol; 1,6-hexanediol; 1,3-bis-(2-hydroxyethoxy)cyclohexane; 1,4-cyclohexyldimethylol; 1,3-bis-[2-(2-hydroxyethoxy) ethoxy]cyclohexane; 1,3-bis-{2-[2-(2-hydroxyethoxy) ethoxy] ethoxy} cyclohexane; polytetramethylene ether glycol, preferably having a molecular weight ranging from 250 to 3900; resorcinol-di-(beat-hydroxyethyl)ether and its derivatives; hydroquinone-di-(beta-hydroxyethyl) ether and its derivatives; 1,3-bis-(2-hydroxyethoxy) benzene; 1,3-bis-[2-(2-hydroxyethoxy) ethoxy] benzene; N,N-bis(β-hydroxypropyl) aniline; 2-propanol-1,1'-phenylaminobis; and mixtures thereof. The hydroxy-terminated curing agent may have a molecular weight of at least 50. In one embodiment, the molecular weight of the hydroxy-terminated curing agent is 2000 or less.

In one embodiment, a saturated hydroxy-terminated curing agent is generally used when making a light stable composition. Such saturated hydroxy-terminated curing agents include, but are not limited to, ethylene glycol; diethylene glycol; polyethylene glycol; propylene glycol; 2-methyl-1,3-propanediol; 2,-methyl-1,4-butanediol; dipropylene glycol; polypropylene glycol; 1,2-butanediol; 1,3-butanediol; 1,4-butanediol; 2,3-butanediol; 2,3-dimethyl-2,3-butanediol; trimethylolpropane; cyclohexyldimethylol; triisopropanolamine; N,N,N',N'-tetra-(2-hydroxypropyl)-ethylene diamine; diethylene glycol bis-(aminopropyl) ether; 1,5-pentanediol; 1,6-hexanediol; 1,3-bis-(2-hydroxyethoxy)cyclohexane; 1,4-cyclohexyldimethylol; 1,3-bis-[2-(2-hydroxyethoxy) ethoxy] cyclohexane; 1,3-bis-{2-[2-(2-hydroxyethoxy) ethoxy] ethoxy} cyclohexane; polytetramethylene ether glycol having molecular weight ranging from 250 to 3900; and mixtures thereof.

Thus, both types of curing agents, i.e., hydroxy-terminated and amine curatives, may include one or more saturated, unsaturated, aromatic, and cyclic groups. Additionally, the hydroxy-terminated and amine curatives may include one or more halogen groups. To further improve the shear resistance of the resulting polyurea elastomers, a trifunctional curing agent can be used to help improve cross-linking.

Skilled artisans are aware that the various properties of the golf ball and golf ball components, e.g., hardness, may be controlled by adjusting the ratio of prepolymer to curing agent, which is a function of the NCO content of the prepolymer and molecular weight of the curing agent. The isocyanate content of the prepolymer and the equivalent weight of the curative mixture govern the total amount of curative used. For example, the ratio of a polyurea prepolymer with 6 percent unreacted NCO groups cured with 1,4-butanediol is approximately 15.6:1, whereas the ratio of the same prepolymer cured with 4,4'-bis-(sec-butylamino)-dicyclohexylmethane (Clearlink 1000) is approximately 4.36:1. Generally, the ratio of equivalents of curative to equivalents of prepolymer, known as % theory, is 60% to 120%, preferably 70% to 110%.

The amount of curing agent used determines whether a composition of the invention will be thermoplastic or thermoset, the method of molding the compositions of the invention onto the ball also will vary depending on the type of composition. For example, thermoplastic polyurea compositions of the present invention may be used to make thermoplastic pellets that can be molded onto the ball by injection molding or compression molding. Thermoset polyurea compositions may be cast onto the ball. In addition, both the thermoplastic and thermoset polyurea compositions of the present invention also may be formed around the core using reaction injection molding (RIM) and liquid injection molding (LIM) techniques.

There are two basic techniques used to process urea elastomers: the one-shot technique and the prepolymer technique. The one-shot technique reacts the isocyanate, the amine-terminated compound, and the curing agent in one step, whereas the prepolymer technique requires a first reaction between the amine-terminated compound and an isocyanate to produce a polyurea prepolymer, and a subsequent reaction between the prepolymer and a curing agent. Either method may be employed to produce the polyurea compositions of the invention, however, the prepolymer technique is preferred because it provides better control of chemical reaction and, consequently, results in more uniform properties for the elastomers.

More than one chain extender may be used in combination, or in combination with a high molecular weight amine terminated compound or polyol, provided they do not have a significant negative effect on the final product. The use of such combinations would permit the preparation of more than one hardness using the same prepolymer, which is advantageous to urethane processors, who routinely are required to manufacture several different hardnesses and can, thus, do so without switching prepolymers.

The polyurea compounds and polyisocyanate mixtures described herein can be used in produce two-piece, three-piece, four-piece etc. golf balls. Two-piece golf balls are generally regarded as having a core, which is either solid or wound, and an outer layer. Examples of solid cores are rubber and can be one solid piece or multiple layers. A wound core is generally made of elastic winding wrapped around either a solid or liquid-filled center. Three-piece balls have an additional layer covering the core, so that the ball is characterized as having a core, an inner cover layer and an outer cover layer.

The polyurea compounds and polyisocyanate mixtures described may also be used in the design and process for making golf balls known in the art. Examples of U.S.

Patents describing processes and geometric design include, for example, 4,274,6378; 6,506,130; 6,595,873; 7,504,855; 7,491,787; 7,481,956; 7,473,194; 7,468,006; 7,458,904; 7,452,291; 7,446,150; 7,438,651; 7,435,192; 7,427,243; 7,388,053; 7,361,103; 7,357.734; 7,357,733; and 7,354,357.

### Additives

Additional materials conventionally included in polyurethane and polyurea compositions may be added to the polyurea prepolymers, the modified curative blends, or the composite compositions. These additional materials include, but are not limited to, catalysts, wetting agents, coloring agents, optical brighteners, crosslinking agents, whitening agents such as TiO₂ and ZnO, UV absorbers, hindered amine light stabilizers, defoaming agents, processing aids, surfactants, and other conventional additives. For example, wetting additives may be added to the modified curative blends of the invention to more effectively disperse the pigment(s). Suitable wetting agents are available from Byk-Chemle and Crompton Corporation, among others.

Antioxidants, stabilizers, softening agents, plasticizers, including internal and external plasticizers, impact modifiers, foaming agents, density-adjusting fillers, reinforcing materials, and compatibilizers may also be added to any composition of the invention. Those of ordinary skill in the art are aware of the purpose of these additives and the amounts that should be employed to fulfill those purposes.

### Catalysts

A catalyst may also be employed to promote the reaction between the prepolymer and the curing agent for both the polyurethane and polyurea compositions. Suitable catalysts include, but are not limited to bismuth catalyst; zinc octoate; stannous octoate; tin catalysts such as bis-butyltin dilaurate (DABCO® T-12 manufactured by Air Products and Chemicals, Inc.), bis-butyltin diacetate (DABCO® T-1); stannous octoate (DABCO® T-9); tin (II) chloride, tin (IV) chloride, bis-butyltin dimethoxide (FASCAT®-4211), dimethyl-bis[1-oxonedecyl)oxy] stannane (FORMEZ® UL-28), di-n-octyltin bis-isooctyl mercaptoacetate (FORMEZ® UL-29); amine catalysts such as triethylenediamine (DABCO® 33-LV), triethylamine, and tributylamine; organic acids such as oleic acid and acetic acid; delayed catalysts such as POLYCAT™ SA-1, POLYCAT™ SA-2, POLYCAT™, and the like; and mixtures thereof. In one embodiment, the catalyst is bis-butyltin dilaurate. The catalyst is preferably added in an amount sufficient to catalyze the reaction of the components in the reactive mixture. In one embodiment, the catalyst is present in an amount from 0.001 percent to 5 percent by weight of the composition. For example, when using a tin catalyst, such as bis-butyltin dilaurate, the catalyst is preferably present in an amount from 0.005 percent to 1 percent. In another embodiment, the catalyst is present in an amount of 0.05 weight percent or greater. In another embodiment, the catalyst is present in an amount of 0.5 weight percent or greater.

Use of low levels of tin catalysts, typically from 0 to 0.04 weight percent of the total composition, requires high temperatures to achieve a suitable reaction rate, which may result in degradation of the prepolymer. Increasing the amount of catalysts to unconventional high levels enables the reduction in process temperatures while retaining comparable cure stages. Use of the higher catalyst level also allows the mixing speeds to be reduced. Thus, in one embodiment, the tin catalyst is present in an amount from 0.01 percent to 0.55 percent by weight of the composition. In another embodiment, 0.05 percent to 0.4 percent of tin catalyst is present in the composition. In yet another embodiment, the tin catalyst is present in an amount from 0.1 percent to 0.25 percent.

### Density-Adjusting Filler(s)

Fillers may be added to the polyurethane and polyurea compositions of the invention to affect Rheological and mixing properties, the specific gravity (i.e., density-modifying fillers), the modulus, the tear strength, reinforcement, and the like. The fillers are generally inorganic, and suitable fillers include numerous metals, metal oxides and salts, such as zinc oxide and tin oxide, as well as barium sulfate, zinc sulfate, calcium carbonate, zinc carbonate, barium carbonate, clay, tungsten, tungsten carbide, an array of silicas, regrind (recycled core material typically ground to 30 mesh particle), high-Mooney-viscosity rubber regrind, and mixtures thereof.

For example, the compositions of the invention can be reinforced by blending with a wide range of density-adjusting fillers, e.g., ceramics, glass spheres (solid or hollow, and filled or unfilled), and fibers, inorganic particles, and metal particles, such as metal flakes, metallic powders, oxides, and derivatives thereof, as is known to those with skill in the art. The selection of such filler(s) is dependent upon the type of golf ball desired, i.e., one-piece, two-piece, multi-component, or wound. Generally, the filler will be inorganic, having a density of greater than 4 g/cc, and will be present in amounts between 5 and 65 weight percent based on the total weight of the polymer components included in the layer(s) in question. Examples of useful fillers include zinc oxide, barium sulfate, calcium oxide, calcium carbonate, and silica, as well as other known corresponding salts and oxides thereof.

Fillers may also be used to modify the weight of the core or at least one additional layer for specialty balls, e.g., a lower weight ball is preferred for a player having a low swing speed.

### Light Stabilizers

The components for producing the covers may contain at least one light stabilizing component to prevent significant yellowing from unsaturated components contained therein. The use of a light stabilizer is preferred, for instance, for compositions having a difference in yellowness (ΔY) of 15 or greater, but also may be added to compositions having a difference in yellowness of from 12 to 15. As used herein, light stabilizer may be understood to include hindered amine light stabilizers, ultraviolet (UV) absorbers, and antioxidants.

Suitable light stabilizers include, but are not limited to, TINUVIN® 292, TINUVIN® 328, TINUVIN® 213, TINUVIN® 765, TINUVIN® 770 and TINUVIN® 622. TINUVIN® products are available from Ciba Specialty Chemicals of Tarrytown, N.Y. In one embodiment, the light stabilizer is UV absorber TINUVIN® 328, which is useful with aromatic compounds. In another embodiment, hindered amine light stabilizer TINUVIN® 765 is used with aromatic or aliphatic compounds. In addition, TINUVIN® 292 may also be used with the aromatic or aliphatic compositions of the invention.

Dyes, as well as optical brighteners and fluorescent pigments may also be included in the golf ball covers produced with polymers formed according to the present invention. Such additional ingredients may be added in any amounts that will achieve their desired purpose.

In one embodiment, the compositions preferably include only saturated components because unsaturated components yellow over a period of time. While saturated compositions are resistant to discoloration, however, they are not immune to deterioration in their mechanical properties upon weathering. Addition of UV absorbers and light stabilizers to any of the above compositions may help to maintain the tensile strength, elongation, and color stability. The use of light stabilizing components also may assist in preventing cover surface fractures due to photodegredation.

### Fragrance Components

Some materials used in the polyurea or polyurethane compositions are odorous in nature or produce odors during reaction with other materials or with oxygen. For example, the odor of curative Ethacure 300 is attributed to dimethyl disulfide (DMDS) once the product reacts with oxygen. As used herein, a material or component is odorous when the odor threshold surpasses a threshold of 0.029 mg/m³ in air. A fragrance or masking component may be added to the compositions of the invention to eliminate odors. The fragrance component is preferably added in an amount of 0.01 percent to 1.5 percent by weight of the composition. In one embodiment, the fragrance component is added to the composition in an amount of 0.03 percent or greater by weight of the composition. In another embodiment, the fragrance component is added to the composition in an amount of 1.2 percent or less by weight of the composition. In yet another embodiment, the fragrance component is added in an amount of 0.5 percent to 1 percent by weight of the composition. For example, an optimum loading of the fragrance component may be 0.08 percent by weight of the composition, but adding more may enhance the effect if needed.

Suitable fragrance components include, but are not limited to, Long Lasting Fragrance Mask #59672, Long Lasting Fragrance Mask #46064, Long Lasting Fragrance Mask #55248, Non-Descript Fragrance Mask #97779, Fresh and Clean Fragrance Mask #88177, and Garden Fresh Fragrance Mask #87473, all of which are manufactured by Flavor and Fragrance Specialties of Mahwah, N.J. Other non-limiting examples of fragrance components that may be added to the compositions of the invention include benzaldehyde, benzyl benzoate, benzyl propionate, benzyl salicylate, benzyl alcohol, cinnamic aldehydes, natural and essential oils derived from botanical sources, and mixtures thereof.

### Golf Ball Properties

The properties such as hardness, modulus, core diameter, intermediate layer thickness and cover layer thickness of the golf balls are known to effect play characteristics such as spin, initial velocity and feel of the present golf balls. For example, the flexural and/or tensile modulus of the intermediate layer are believed to have an effect on the "feel" of the golf balls. It should be understood that the ranges herein are meant to be intermixed with each other, i.e., the low end of one range may be combined with a high end of another range.

### Component Dimensions

Dimensions of golf ball components, i.e., thickness and diameter, may vary depending on the desired properties. For the purposes of using the polyurea compositions and isocyanate mixtures describe herein for production of golf balls, any layer thickness may be employed. Non-limiting examples of the various embodiments are provided here with respect to layer dimensions.

While USGA specifications limit the size of a competition golf ball to more than 1.68 inches (4.27 cm) in diameter, golf balls of any size can be used for leisure golf play. The preferred diameter of the golf balls is from 1.68 inches (4.27 cm) to 1.8 inches (4.6 cm). The more preferred diameter is from 1.68 inches (4.27 cm) to 1.76 inches (4.47 cm). A diameter of from 1.68 inches (4.27 cm) to 1.74 inches (4.42 cm) is most preferred, however diameters anywhere in the range of from 1.7 (4.3 cm) to 1.95 (5.0 cm) inches can be used. Preferably, the overall diameter of the core and all intermediate layers is 80 percent to 98 percent of the overall diameter of the finished ball.

The core may have a diameter ranging from 0.09 inches (0.2 cm) to 1.65 inches (4.19 cm). In one embodiment, the diameter of the core is 1.2 inches (3.0 cm) to 1.630 inches (4.14 cm). In another embodiment, the diameter of the core is 1.3 inches (3.3 cm) to 1.6 inches (4.0 cm), preferably from 1.39 inches (3.53 cm) to 1.6 inches (4.1 cm), and more preferably from 1.5 inches (3.8 cm) to 1.6 inches (4.1 cm). In yet another embodiment, the core has a diameter of 1.55 inches (3.94 cm) to 1.65 inches (4.19 cm).

The core of the golf ball may also be extremely large in relation to the rest of the ball. For example, in one embodiment, the core makes up 90 percent to 98 percent of the ball, preferably 94 percent to 96 percent of the ball. In this embodiment, the diameter of the core is preferably 1.54 inches (3.91 cm) or greater, preferably 1.55 inches (3.94 cm) or greater. In one embodiment, the core diameter is 1.59 inches (4.04 cm) or greater. In another embodiment, the diameter of the core is 1.64 inches (4.17 cm) or less.

When the core includes an inner core layer and an outer core layer, the inner core layer is preferably 0.9 inches (2.3 cm) or greater and the outer core layer preferably has a thickness of 0.1 inches (0.25 cm) or greater. In one embodiment, the inner core layer has a diameter from 0.09 inches (0.23 cm) to 1.2 inches (3.0 cm) and the outer core layer has a thickness from 0.1 inches (0.25 cm) to 0.8 inches (2 cm). In yet another embodiment, the inner core layer diameter is from 0.095 inches (0.24 cm) to 1.1 inches (2.8 cm) and the outer core layer has a thickness of 0.20 inches (0.5 cm) to 0.03 inches (0.08 cm).

The cover typically has a thickness to provide sufficient strength, good performance characteristics, and durability. In one embodiment, the cover thickness is from 0.02 inches (0.05 cm) to 0.35 inches (0.9 cm). The cover preferably has a thickness of 0.02 inches (0.05 cm) to 0.12 inches (0.31 cm), preferably 0.1 inches (0.25 cm) or less. In one embodiment, the outer cover has a thickness from 0.02 inches (0.05 cm) to 0.07 inches (0.18 cm). In another embodiment, the cover thickness is 0.05 inches (0.13 cm) or less, preferably from 0.02 inches (0.05 cm) to 0.05 inches (0.13 cm). In yet another embodiment, the outer cover layer of such a golf ball is between 0.02 inches (0.05 cm) and 0.045 inches (0.11 cm). In still another embodiment, the outer cover layer is 0.025 (0.06 cm) to 0.04 inches (0.1 cm).thick. In one embodiment, the outer cover layer is 0.03 inches (0.08 cm) thick.

The range of thicknesses for an intermediate layer of a golf ball is large because of the vast possibilities when using an intermediate layer, i.e., as an outer core layer, an inner cover layer, a wound layer, a moisture/vapor barrier layer. The intermediate layer, or inner cover layer, may have a thickness 0.3 inches (0.8 cm) or less. In one embodiment, the thickness of the intermediate layer is from 0.002 inches (0.005 cm) to 0.1 inches (0.25 cm), preferably 0.01 inches (0.025 cm) or greater. In one embodiment, the thickness of the intermediate layer is 0.09 inches (0.23 cm) or less, preferably 0.06 inches (0.15 cm) or less. In another embodiment, the intermediate layer thickness is 0.05 inches (0.13 cm) or less, more preferably 0.01 inches (0.025 cm) to 0.045 inches (0.11 cm). In one embodiment, the intermediate layer, thickness is 0.02 inches (0.05 cm) to 0.04 inches (0.1 cm). In another embodiment, the intermediate layer thickness is from 0.025 inches (0.064 cm) to 0.035 inches (0.089 cm). In yet another embodiment, the thickness of the intermediate layer is 0.035 inches (0.089 cm) thick. In still another embodiment, the inner cover layer is from 0.03 inches (0.076 cm) to 0.035 inches (0.089 cm) thick. Varying combinations of these ranges of thickness for the intermediate and outer cover layers may be used in combination with other embodiments described herein.

The ratio of the thickness of the intermediate layer to the outer cover layer is preferably 10 or less, preferably from 3 or less. In another embodiment, the ratio of the thickness of the intermediate layer to the outer cover layer is 1 or less. The core and intermediate layer(s) together form an inner ball preferably having a diameter of 1.48 inches (3.76 cm) or greater for a 1.68-inch (4.27 cm) ball. In one embodiment, the inner ball of a 1.68-inch (4.27 cm) ball has a diameter of 1.52 inches (3.86 cm) or greater. In another embodiment, the inner ball of a 1.68-inch (4.27 cm) ball has a diameter of 1.68 inches (4.22 cm) or less. In yet another embodiment, a 1.72-inch (4.37 cm) (or more) ball has an inner ball diameter of 1.50 inches (3.81 cm) or greater. In still another embodiment, the diameter of the inner ball for a 1.72-inch (4.37 cm) ball is 1.70 (4.32 cm) inches or less.

### Hardness

Most golf balls consist of layers having different hardnesses, e.g., hardness gradients, to achieve desired performance characteristics. Golf balls prepared with the components described herein may be used for producing golf balls having hardness gradients between layers, as well as those golf balls with layers having the same hardness.

It should be understood, especially to one of ordinary skill in the art, that there is a fundamental difference between "material hardness" and "hardness, as measured directly on a golf ball." Material hardness is defined by the procedure set forth in ASTM-D2240 and generally involves measuring the hardness of a flat "slab" or "button" formed of the material of which the hardness is to be measured. Hardness, when measured directly on a golf ball (or other spherical surface) is a completely different measurement and, therefore, results in a different hardness value. This difference results from a number of factors including, but not limited to, ball construction (i.e., core type, number of core and/or cover layers, etc.), ball (or sphere) diameter, and the material composition of adjacent layers. It should also be understood that the two measurement techniques are not linearly related and, therefore, one hardness value cannot easily be correlated to the other.

The cores may have varying hardnesses depending on the particular golf ball construction. In one embodiment, the core hardness is at least 15 Shore A, preferably 30 Shore A, as measured on a formed sphere. In another embodiment, the core has a hardness of 50 Shore A to 90 Shore D. In yet another embodiment, the hardness of the core is 80 Shore D or less. In some embodiments, the core has a hardness 30 to 65 Shore D, and more preferably, the core has a hardness 35 to 60 Shore D.

The intermediate layer(s) may also vary in hardness depending on the specific construction of the ball. In one embodiment, the hardness of the intermediate layer is 30 Shore D or greater. In another embodiment, the hardness of the intermediate layer is 90 Shore D or less, preferably 80 Shore D or less, and more preferably 70 Shore D or less. In yet another embodiment, the hardness of the intermediate layer is 50 Shore D or greater, preferably 55 Shore D or greater. In one embodiment, the intermediate layer hardness is from 55 Shore D to 65 Shore D. The intermediate layer may also be 65 Shore D or greater.

When the intermediate layer is intended to be harder than the core layer, the ratio of the intermediate layer hardness to the core hardness preferably 2 or less. In one embodiment, the ratio is 1.8 or less. In yet another embodiment, the ratio is 1.3 or less.

As with the core and intermediate layers, the cover hardness may vary depending on the construction and desired characteristics of the golf ball. The ratio of cover hardness to inner ball hardness is a primary variable used to control the aerodynamics of a ball and, in particular, the spin of a ball. In general, the harder the inner ball, the greater the driver spin and the softer the cover, the greater the driver spin.

For example, when the intermediate layer is intended to be the hardest point in the ball, e.g., 50 Shore D to 75 Shore D, the cover material may have a hardness of 20 Shore D or greater, preferably 25 Shore D or greater, and more preferably 30 Shore D or greater, as measured on the slab. In another embodiment, the cover itself has a hardness of 30 Shore D or greater. In particular, the cover may be from 30 Shore D to 70 Shore D. In one embodiment, the cover has a hardness of 40 Shore D to 65 Shore D, and in another embodiment, 40 Shore to 55 Shore D. In another aspect of the invention, the cover has a hardness less than 45 Shore D, preferably less than 40 Shore D, and more preferably 25 Shore D to 40 Shore D. In one embodiment, the cover has a hardness from 30 Shore D to 40 Shore D.

In this embodiment when the outer cover layer is softer than the intermediate layer or inner cover layer, the ratio of the Shore D hardness of the outer cover material to the intermediate layer material is 0.8 or less, preferably 0.75 or less, and more preferably 0.7 or less. In another embodiment, the ratio is 0.5 or less, preferably 0.45 or less.

In yet another embodiment, the ratio is 0.1 or less when the cover and intermediate layer materials have hardnesses that are substantially the same. When the hardness differential between the cover layer and the intermediate layer is not intended to be as significant, the cover may have a hardness of 55 Shore D to 65 Shore D. In this embodiment, the ratio of the Shore D hardness of the outer cover to the intermediate layer is 1.0 or less, preferably 0.9 or less.

The cover hardness may also be defined in terms of Shore C. For example, the cover may have a hardness of 70 Shore C or greater, preferably 80 Shore C or greater. In another embodiment, the cover has a hardness of 95 Shore C or less, preferably 90 Shore C or less.

In another embodiment, the cover layer is harder than the intermediate layer. In this design, the ratio of Shore D hardness of the cover layer to the intermediate layer is 1.33 or less, preferably from 1.14 or less.

When a two-piece ball is constructed, the core may be softer than the outer cover. For example, the core hardness may range from 30 Shore D to 50 Shore D, and the cover hardness may be from 50 Shore D to 80 Shore D. In this type of construction, the ratio between the cover hardness and the core hardness is preferably 1.75 or less. In another embodiment, the ratio is 1.55 or less. Depending on the materials, for example, if a composition of the invention is acid-functionalized wherein the acid groups are at least partially neutralized, the hardness ratio of the cover to core is preferably 1.25 or less.

### Compression

Compression values are dependent on the diameter of the component being measured. The Atti compression of the core, or portion of the core, of golf balls utilizing the components describe herein is preferably less than 80, more preferably less than 75. The terms "Atti compression" or "compression" are defined as the deflection of an object or material relative to the deflection of a calibrated spring, as measured with an Atti Compression Gauge, that is commercially available from Atti Engineering Corp. of Union City, N.J. Atti compression is typically used to measure the compression of a golf ball. In another embodiment, the core compression is from 40 to 80, preferably from 50 to 70. In yet another embodiment, the core compression is preferably below 50, and more preferably below 25.

In an alternative, low compression embodiment, the core has a compression less than 20, more preferably less than 10, and most preferably, O. As known to those of ordinary skill in the art, however, the cores generated according to the present invention may be below the measurement of the Atti Compression Gauge.

The core of the golf ball may also have a Soft Center Deflection Index (SCDI) compression of less than 160, more preferably, between 40 and 160, and most preferably, between 60 and 120.

In one embodiment, golf balls preferably have an Atti compression of 55 or greater, preferably from 60 to 120. In another embodiment, the Atti compression of the golf balls is at least 40, preferably from 50 to 120, and more preferably from 60 to 100. In yet another embodiment, the compression of the golf balls is 75 or greater and 95 or less. For example, a preferred golf ball may have a compression from 80 to 95.

### Spin Rate

As known to those of ordinary skill in the art, the spin rate of a golf ball will vary depending on the golf ball construction. In a multilayer ball, e.g., a core, an intermediate layer, and a cover, wherein the cover is formed from the polyurea or polyurethane compositions of the invention, the spin rate of the ball off a driver ("driver spin rate") is preferably 2700 rpm or greater. In one embodiment, the driver spin rate is 2800 rpm to 3500 rpm. In another embodiment, the driver spin rate is 2900 rpm to 3400 rpm. In still another embodiment, the driver spin rate may be less than 2700 rpm.

Methods of determining the spin rate should be well understood by those of ordinary skill in the art. Examples of methods for determining the spin rate are disclosed in U.S. Pat. Nos. 6,500,073, 6,488,591, 6,286,364, and 6,241,622.

### Flexural Modulus

Generally golf balls will have an intermediate layer with a flexural modulus of 500 psi (3.5 MPa) to 500,000 psi (3500 MPa), More preferably, the flexural modulus of the intermediate layer is 1,000 psi (7 MPa) to 250,000 psi (1700 MPa). In a further embodiment, the flexural modulus of the intermediate layer is 2,000 psi (14 MPa) to 200,000 psi (1400 MPa).

The flexural modulus of the cover layer is generally 2,000 psi (14 MPa) or greater, and may be 5,000 psi (35 MPa) or greater. In one embodiment, the flexural modulus of the cover is from 10,000 psi (70 MPa) to 150,000 psi (1000 MPa). In a further embodiment the flexural modulus of the cover layer is 15,000 psi (100 MPa) to 120,000 psi (830 MPa). Most preferably, the flexural modulus of the cover layer is 18,000 psi (120 MPa) to 110,000 psi (760 MPa). In another embodiment, the flexural modulus of the cover layer is 100,000 psi (700 MPa) or less, preferably 80,000-(550 MPa) or less, and more preferably 70,000 psi (480 MPa) or less. For example, the flexural modulus of the cover layer may be from 10,000 psi (70 MPa) to 70,000 psi (480 MPa), from 12,000 psi (85 MPa) to 60,000 psi (410 MPa), or from 14,000 psi (95 MPa) to 50,000 psi (350 MPa).

In one embodiment, when the cover layer has a hardness of 40 Shore D to 60 Shore D and the cover layer preferably has a flexural modulus of 55,000 psi (380 MPa) to 65,000 psi (450 MPa).

In one embodiment, the ratio of the flexural modulus of the intermediate layer to the cover layer is 0.003 to 50. In another embodiment, the ratio of the flexural modulus of the intermediate layer to the cover layer is 0.006 to 4.5. In yet another embodiment, the ratio of the flexural modulus of the intermediate layer to the cover layer is 0.11 to 4.5.

In one embodiment, the compositions of the invention are used in a golf ball with multiple cover layers having essentially the same hardness, but differences in flexural moduli. In this aspect of the invention, the difference between the flexural moduli of the two cover layers is preferably 5,000 psi (35 MPa) or less. In another embodiment, the difference in flexural moduli is 500 psi (3.5 MPa) or greater. In yet another embodiment, the difference in the flexural moduli between the two cover layers, wherein at least one is reinforced is 500 psi (3.5 MPa) to 10,000 psi (70 MPa), preferably from 500 psi (3.5 MPa) to 5,000 psi (35 MPa). In one embodiment, the difference in flexural moduli between the two cover layers formed of unreinforced or unmodified materials is 1,000 psi (7 MPa)to 2,500 psi (17 MPa).

### Specific Gravity

The specific gravity of a cover or intermediate layer is preferably at least 0.7. In one embodiment, the specific gravity of the intermediate layer or cover is 0.8 or greater, preferably 0.9 or greater. For example, in one embodiment, the golf ball has an intermediate layer with a specific gravity of 0.9 or greater and a cover having a specific gravity of 0.95 or greater. In another embodiment, the intermediate layer or cover has a specific gravity of 1.00 or greater. In yet another embodiment, the specific gravity of the intermediate layer or cover is 1.05 or greater, preferably 1.10 or greater.

The core may have a specific gravity of 1.00 or greater, preferably 1.05 or greater. For example, a golf ball of the invention may have a core with a specific gravity of 1.10 or greater and a cover with a specific gravity of 0.95 or greater.

### Adhesion Strength

The adhesion, or peel, strength of the polyurethane and polyurea compositions of the invention is preferably 5 lb_{f}/in or greater. In one embodiment, the adhesion strength is 30 lb_{f}/in or less.

Skilled artisans are aware of methods to determine adhesion strength. For example, cross-hatch tests and repeated ball impact tests are useful to determine the adhesion strength of a particular layer of a golf ball. The cross-hatch test consists of cutting the material into small pieces in mutually perpendicular directions, applying a piece of adhesive cellophane tape over the material, rapidly pulling off the tape, and counting the number of pieces removed. The repeated impact test consists of subjecting the finished golf ball to impact repeatedly and visually examining the coating film for peeling from the golf ball. Examples of these methods are provided in U.S. Patent 5,316,730.

### Water Resistance

The water resistance of a golf ball portion formed from the compositions of the invention may be expressed in terms of weight gain over a period of time. For example, weight changes of a golf ball portion monitored over a period of seven weeks in 100 percent relative humidity and 72° F. help to demonstrate which balls have better water resistance. In one embodiment, the golf ball portions of the invention have a weight gain of 0.15 grams or less after seven weeks. In another embodiment, the golf balls of the invention have a weight gain of 0.13 grams or less after a seven-week storage period. In still another embodiment, the weight gain of the golf balls of the invention is 0.09 grams or less after seven weeks.

Size gain may also be used as an indicator of water resistance. That is, the more water a golf ball takes on, the larger a golf ball becomes due to the water enclosed beneath the outermost layer of the golf ball portion. Preferally the golf balls have no appreciable size gain.

### Shear/Cut Resistance

The cut resistance of a golf ball cover may be determined using a shear test having a scale from 1 to 5 assessing damage and appearance. In one embodiment, the damage rank is 2 or more. In a further embodiment, the shear test is 3 or more. In another embodiment, the damage rank is 4 or more. The appearance rank of a golf ball is preferably 3 or more. In one embodiment, the appearance rank is 4 or more, most preferably 5.

### Light Stability

The light stability of the cover may be quantified by the difference in yellowness index (ΔYI), i.e., yellowness measured after a predetermined exposure time—yellowness before exposure. In one embodiment, the ΔYI is 10 or less after 5 days (120 hours) of exposure. The difference in the b chroma dimension (Δb*, yellow to blue) is also a way to quantify the light stability of the cover. In one embodiment, the Δb* is 4 or less after 5 days (120 hours) of exposure.

### Heat Stability

The heat stability of the cover may be quantified by the difference in hardness of the cover at different temperatures, for example, from -30°C to 50°C, and more importantly from 20 °C to 50°C. Hardness of the cover at a given temperature may be measured by a Durometer (ASTM D2240) after the cover is aged at the temperature for 30∼80 minutes. Hardness drop, i.e., hardness measured at 20°C minus hardness measured at 50°C, can then be used to quantify heat stability of the cover. The hardness drop of a golf ball is preferably 10 or less, more preferably 6 or less, and most preferably 3 or less. In one embodiment, hardness drop is preferably 8 or less, more preferably 6 or less.

### EXAMPLES

The following non-limiting examples are merely illustrative of the preferred embodiments of the present invention, and are not to be construed as limiting the invention, the scope of which is defined by the appended claims. Percentages and parts are by weight unless otherwise indicated, the present invention will be more apparent from the following examples.

### Reactivity Studies

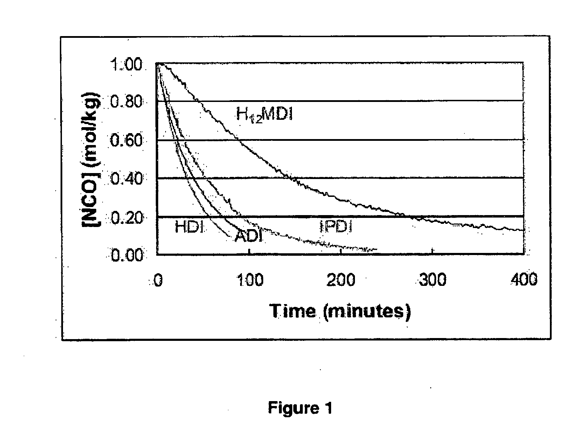

A set of reactions is performed using an RC-1 reactor/calorimeter with in-situ infrared spectroscopy (FT-IR). Approximately 1 kg of 2-ethoxy-ethanol (2EE) is charged to the reactor and the contents are allowed to equilibrate to the desired temperature. Isocyanate is then injected and the FT-IR is used to monitor the disappearance of the NCO groups as well as the appearance of urethane linkages. No catalyst is used in of the runs. A large excess of hydroxyls is used; typical mole ratios of OH:NCO ranged from 32 to 90. Various diisocyanates are tested with this setup; IPDI, H12MDI, HDI, and 50/50 1,3-/1.4-bis(isocyanatomethyl) cyclohexane isomers (ADI). A comparison of the reactivity of these isocyanates is shown in Figure 1. All runs were performed at the same temperature (100°C) and similar OH:NCO mole ratios.

The figure shows HDI is the most reactive of the isocyanates examined. IPDI has two different NCO groups: a primary and a secondary, and those exhibit slightly different reactivity. HMDI is the slowest of the isocyanates examined, with both its groups having the same reactivity. 1,3/1,4-ADI is the fastest cycloaliphatic isocyanate examined, slower only to HDI. Reactivity of the isocyanates was found to follow the order of HDI>ADI>IPDI>H12MDI.

Details of raw material used in the examples are listed below.
Isocyanate 1 — 4,4 MDI, available as ISONATE™ M125 from The Dow Chemical Company
Isocyanate 2 — A 50/50 mixture of 4,4 MDI and 2,4 MDI available as ISONATE™ 50 OP from The Dow Chemical company
Isocyanate 3 — is an 80/20 blend of the 2,4- and 2,6-isomers of toluene diisocyanate.
Isocyanate 4 — 4,4'-methylene bis(cyclohexyl) isocyanate, known as H₁₂MDI, available from Bayer AG as DESMODUR™ W.
Isocyanate 5 — A mixture of dimerized uretdione of HDI and trimmerized isocyanate of HDI, supplied as DESMODUR™ N3400 from Bayer AG
Isocyanate 6— A 50/50 mixture of 1,3-bis(isocyanatomethyl)cydohexane and 1,4-bis(isocyanatomethyl)cyclohexane.
Polyamine 1 — Polyamine polyether JEFFAMINE™ SD 2001 from Huntsman Corporation. (NN,-bis(2-propyl)polyoxypropylenediamine)
Polyamine 2 — Polyamine polyethe VERSALINK™ Oligomeric Diamine P1000 from Air Products Polyamine polyether, (Polytetramethyleneoxide-di-p-aminobenzoate).
Polyamine 3 — Polyamine hydrocarbon, an amine terminated polybutadiene polyol having a molecular weight of about 2000.
Polyamine 4- Polyamine polyether JEFFAMINE™ XTJ 605 from Huntsman Corporation. (Oxirane, 2-methyl-, polymer with alpha.-hydro-. omega.-hydroxypoly(oxy-1,4-butanediyl), bis[methyl-2-[(1-methylethyl)amino]ethyl] ether.)
Curing Agent 1 — ETHACURE™ 100 LC (diethyltoluenediamine) available from Albermarle Corporation.
Curing Agent 2 — ETHACURE™ SD 10 a low color aliphatic amine available from Albermarle Corporation.
Curing Agent 3 — CLEARLlNK™ 1000, is an aliphatic amine bis-(4-N-sec-butylaminocyclohexyl)-methane.
Curing Agent 4 — POLYCLEAR™ 136 reported to be an aliphatic, modified isophoronediamine (3-(3-[2-cyanoethylamineo)methyl]-3,3,3-trimethyl-cyclohexylamino propinonitrile available BASF.
Curing Agent 5 - Dimethythiotoluenediamine (DMTDA) available as ETHACURE™ 300 from Albermarte Corporation.

### Prepolymer Example 1

A reactor is first charged with 20.33 grams of Isocyanate 1. Under nitrogen blanket and agitation, 79.67 grams of Polyamine 1 is added in increments to avoid exothermic conditions exceeding 85°C. The resulting mixture is maintained at a temperature of about 75°C under agitation for a period of 5 hours to bring the reaction to completion. The reaction product has a NCO content of 2.90%. The reaction product is then blended with Isocyanate 4 at 87/13 by weight. The resulting prepolymer has a NCO content of 6.68%.

### Prepolymer Example 2

A MDI polyurea prepolymer is obtained by reacting 20.33 grams of Isocyanate 1 to 79.67 grams of Polyamine1 under the same conditions as those in Prepolymer Example 1. The resulting prepolymer has a NCO content of 2.90%. The reaction product was then blended with Isocyanate 5 at 80/20 by weight. The final prepolymer has a NCO content of 6.68%.

### Prepolymer Example 3

A MDI polyurea prepolymer is obtained by reacting 20.33 grams of Isocyanate 2 with 79.67 grams of Polyaminel 1 under the same conditions as those in Prepolymer Example 1. The resulting prepolymer has a NCO content of 2.85%. The reaction product is then blended with Isocyanate 5 at 80/20 by weight. The final prepolymer has a NCO content of 6.63%.

### Prepolymer Example 4

40 grams of Isocyanate 1 is reacted with 60 grams of Polyamine 1 conditions as those in Prepolymer Example 1. The reaction product has a NCO content of 10.52%. Excess monomeric MDI in the reaction product is removed via a short path distillator with jacket temperature at 140°C and vacuum at 0.2 mbr. The resulting prepolymer is measured as 2.83% NCO content, containing less than 0.2% monomeric MDI. The stripped prepolymer is then blended with Isocyanate 5 at 80/20 by weight. The final prepolymer has a NCO content of 6.65%.

### Prepolymer Example 5

A TDI polyurea prepolymer is obtained by reacting 14.30 grams of Isocyanate 3 to 85.70 grams of Polyamine 1 under the conditions as those in Prepolymer Example 1. The resulting prepolymer has a NCO content of 2.80%. The prepolymer is then blended with Isocyanate 5 at 80/20 by weight. The final prepolymer has a NCO content of 6.60%.

### Prepolymer Example 6

A TDI polyurea prepolymer is obtained by reacting 16.75 grams of Isocyanate 3 to a blend of 66.60 grams of Polyamine 1 and 16.65 grams of Polyamine 2 using the conditions as those in Prepolymer Example 1. The resulting prepolymer has a NCO content of 3.65%. The prepolymer is then blended with Isocyanate 5 at 83/17 by weight. The final prepolymer has a NCO content of 6.72%.

### Prepolymer Example 7

21.68 grams of Isocyanate 3 is reacted with 78.32 grams of Polyamine 1 using conditions as those in Prepolymer Example 1. The reaction product has a NCO content of 6.89%. Excess monomeric TDI in the reaction product is removed via a short path distillator with jacket temperature at 120°C and vacuum at 0.2 mbr. The resulting prepolymer has a NCO content of 2.86%, containing less than 0.1% monomeric TDI. The stripped prepolymer is then blended with Isocyanate 5 at 80/20 by weight. The final prepolymer has a NCO content of 6.89%.

### Prepolymer Example 8

23.68 grams of Isocyanate 6 is reacted with 76.32 grams of Polyamine 1 at the conditions as those in Prepolymer Example 1. The reaction product has a NCO content of 6.85%. Excess monomeric ADI in the reaction product is removed via a short path distillator with jacket temperature at 110°C and vacuum at 0.2 mbr. The resulting prepolymer is measured to have 2.84% NCO content, containing less than 0.1% monomeric ADI. The stripped prepolymer is then blended with Isocyanate 5 at 80/20 by weight. The final prepolymer has a NCO content of 6.71%.

### Prepolymer Example 9

23.68 grams of isocyanate 6 is reacted with 76.32 grams of Polyamine 3 as per the conditions of Prepolymer Example 1. The reaction product has a NCO content of 6.88%. Excess monomeric ADI in the reaction product is then removed via a short path distillator with jacket temperature at 110°C and vacuum at 0.2 mbr. The resulting prepolymer has a 2.86% NCO content, containing less than 0.1% monomeric ADI. The stripped prepolymer is then blended with Isocyanate 4 at 86/14 by weight. The final prepolymer has a NCO content of 6.92%.

### Prepolymer Example 10

A reactor is first charged with 31.50 grams of Isocyanate 1. Under nitrogen blanket and agitation, 68.50 grams of Polyamine 4 is added in increments to avoid exothermic conditions exceeding 85°C. The resulting mixture is maintained at a temperature of about 75°C under agitation for a period of 5 hours to bring the reaction to completion. The reaction product has a NCO content of 6.68%.

### Prepolymer Example 11

A MDI polyurea prepolymer is obtained by reacting 22.78 grams of Isocyanate 1 to a blend of 61.78 grams of Polyamine 1 and 15.44 grams of Polyamine 2 under conditions as per Prepolymer Example 1. The resulting prepolymer has a NCO content of 3.71%. The prepolymer is then blended with Isocyanate 5 at 83/17 by weight. The final prepolymer has a NCO content of 6.75%.

### Comparative Prepolymer Example 1

Following the procedure of Prepolymer Example 1, 30.90 grams of Isocyanate 4 is reacted with 69.10 grams of Polyamine 1. The resulting prepolymer has a NCO content of 6.90%.

### Comparative Prepolymer Example 2

Following the procedure of PrepolymerExample 1, 43.00 grams of Isocyanate 5 is reacted with 57.0 grams of Polyamine 1. The resulting prepolymer had NCO content of 6.80%.

### Golf Ball Example 1

100 grams of Prepolymer Example 1 at 70°C and 13.44 gram of Ethacure 100 LC at room temperature are mixed with a SpeedMixer DAC 400 FV operated at 2200 rpm for 20 seconds. The resulting mixture is then poured into a an open compression button mold and into the top half of a multi-cavity golf ball mold that had been preheated to about 75°C. Another identical mix started 10 seconds later is poured into the bottom half of the golf ball mold. When the mixture in the top half of the mold has gelled sufficiently to hold a golf ball core, a core is pressed in. The top half is then inverted and mated with the bottom half, which is aided by alignment pins. After the bottom half has reached a gel state appropriate for compression molding, the two halves are pressed together in a press. The molds are then moved to a heated oven set at 75°C for cure. After 35 minutes, the balls and compression buttons are removed from the molds and placed back in the oven. After 4 hours at 75°C, the balls and buttons are removed from the oven and placed at room temperature. After being aged at room temperature for about 7-10 days, the compression buttons have 59% resilience and 47 shore D.

### Golf Ball Example 2

Following the procedure of Golf Ball Example 1, 100 grams of Prepolymer Example 2 at 70 °C is mixed with 13.44 grams of Ethacure 100 LC at room temperature. Golf ball covers and compression buttons are produced at similar conditions as those in Golf Ball Example 1, except that the balls and buttons are demolded and placed at room temperature after only being cured at 75°C for 35 minutes. After being aged at room temperature for about 7-10 days, the resulting elastomer has 56% resilience and 45 Shore D hardness..

### Golf Ball Example 3

Following the procedure of Golf Ball Example 2, 100 grams of Prepolymer Example 3 at 70°C is mixed with 13.33 grams of Ethacure 100 LC at room temperature. After being aged at room temperature for about 7-10 days, the resulted elastomer had 52% resilience and 46 Shore D hardness.

### Golf Ball Example 4

Following the procedure of Golf Ball Example 2, 100 grams of Prepolymer Example 4 at 70 °C is mixed with 13.38 grams of Ethacure 100 LC at room temperature for 35 seconds. The resulting elastomer has 61 % resilience and 47 Shore D hardness.

### Golf Ball Example 5

Following the procedure of in Golf Ball Example 2, 100 grams of Prepolymer Example 5 at 70 °C is mixed with 13.27 grams of Ethacure 100 LC at room temperature for 35 seconds. The resulting elastomer has 60% resilience and 45 Shore D hardness.

### Golf Ball Example 6

Following the procedure of in Golf Ball Example 2, 100 grams of Prepolymer Example 6 at 70 °C is mixed with 13.53 grams of Ethacure 100 LC at room temperature for 25 seconds.The resulting elastomer has 59% resilience and 46 Shore D hardness.

### Golf Ball Example 7

Following the procedure of in Golf Ball Example 2, 100 grams of Prepolymer Example 7 at 70 °C is mixed with 13.86 grams of Ethacure 100 LC at room temperature for 45 seconds. The resultingelastomer has 61% resilience and 48 Shore D hardness.

### Golf Ball Example 8

Following the procedure of in Golf Ball Example 2, 100 grams of Prepolymer Example 8 at 70 °C was mixed with 13.50 grams of Ethacure 100 LC at room temperature for 45 seconds.. The resulting elastomer has 56% resilience and 46 Shore D hardness.

### Golf Ball Example 9

Following the procedure of in Golf Ball Example 1, 100 grams of Prepolymer Example 9 at 70 °C is mixed with 13.90 grams of Ethacure 100 LC at room temperature for 45 seconds. Golf ball covers and compression buttons were produced at similar conditions as those in Golf Ball Example 1. The resulting elastomer has 59% resilience and 47 Shore D hardness..

### Golf Ball Example 10

Following the procedure of in Golf Ball Example 1, 100 grams of Prepolymer Example 8 at 70 °C is mixed with 21.40 grams of Ethacure SD-10 at room temperature for 50 seconds. Golf ball covers and compression buttons were produced at similar conditions as those in Golf Ball Example 1. The resulting elastomer has 51% resilience and 46 Shore D hardness.

### Golf Ball Example 11

Following the procedure of in Golf Ball Example 2, 100 grams of Prepolymer Example 8 at 70 °C is mixed with 24.53 grams of Clearlink 1000 at room temperature for 20 seconds.The resulting elastomer has 45% resilience and 45 Shore D hardness.

### Golf Ball Example 12

Following the procedure of in Golf Ball Example 2, 100 grams of Prepolymer Example 8 at 70 °C is mixed with 21.25 grams of Polyclear 136 at room temperature for about 20 seconds. The resulting elastomer had 42% resilience and 45 Shore D hardness.

### Golf Ball Example 13

Following the procedure of in Golf Ball Example 2, 100 grams of Prepolymer Example 10 at 70 °C is mixed with 16.16 grams of Ethacure 300 at room temperature for about 30 seconds. The resulting elastomer has56% resilience and 47 Shore D hardness.

### Golf Ball Example 14

Following the procedure of in Golf Ball Example 2, 100 grams of Prepolymer Example 11 at 70 °C is mixed with 15.87 grams of a blend of Ethacure 100 and Ethacure 300 at 20/80 by weight at room temperature for about 30 seconds. The resulting elastomer has 58% resilience and 48 Shore D hardness.

### Comparative Golf Ball Example 1

Following the procedure of in Golf Ball Example 1, 100 grams of Comparative Prepolymer Example 1 at 70 °C is mixed with 13.88 grams of Ethacure 100 LC at room temperature for 60 seconds. Golf ball covers and compression buttons were produced at similar conditions as those in Golf Ball Example 1. The resulting elastomer has 52% resilience and 47 Shore D hardness.

### Comparative Golf Ball Example 2

Following the procedure of in Golf Ball Example 1, 100 grams of Comparative Prepolymer Example 1 at 70 °C is mixed with 24.29 grams of Clearlink 1000 at room temperature for 20 seconds. The resulting elastomer had 40% resilience and 45 Shore D hardness.

### Comparative Golf Ball Example 3

Following the procedure of in Golf Ball Example 1, 100 grams of Comparative Prepolymer Example 2 at 70 °C is mixed with 24.13 grams of Clearlink 1000 at room temperature for 20 seconds. The resulting elastomer has 38% resilience and 47 Shore D hardness.

### Comparative Golf Ball Example 4

Following the procedure of in Golf Ball Example 1, 100 grams of Comparative Prepolymer Example 2 at 70 °C is mixed with 13.68 grams of Ethacure 100 LC at room temperature for 30 seconds. The resulting elastomer had 46% resilience and 48 Shore D hardness.

### Resillence

Resilience is determined as the ratio of rebound height to drop height of a metal plunger of prescribed mass and shape which is allowed to fall on the elastomer specimen according to ASTM D 2632, where the sample specimen is at least 0.5 inch (1.3 cm) thick and is firmly mounted so as to prevent movement. A good golf ball cover material should have at least 40% resilience as measured on this test.

### Shear Testing of Golf Balls

The golf balls are tested side by side with commercial golf balls including two with PTMEG based polyurethane urea covers; Titleist PRO V1 and Callaway HX Tour. All balls are hit by a golf professional with a pitching wedge with sharp grooves, and the contact points on the balls are marked. The speed of the impact is about 89 miles/hour and balls are hit from an artificial turf mat to prevent grass or other foreign matter from coming in between the club and the ball. Damage to the balls is rated on a 0 to 5 scale, where 5 indicates a ball with absolutely no marks, 3 indicates a ball with substantial damage to the surface of the cover, but no lost material, and 0 indicates a ball with completely destroyed cover. The results are shown in Table 1.

### Heat Stability of Golf Balls

Hardness of the golf balls is measured at both room temperature (23°C) and 50 °C after being conditioned at the temperature for 60 minutes. Difference of the hardness between 23 °C and 50 °C is recorded and shown in Table 1.

**Table 1**

| Golf Ball | Shear Rating | Hardness, Shore D | Resilience | Heat Stability | Comments |
|---|---|---|---|---|---|
| Example 1 | 4- | 47 | 59% | 5 | Minor mark on cover |
| Example 2 | 4- | 45 | 56% | 4 | Mini cut in cover |
| Example 3 | 4 | 46 | 52% | 4 | Minor mark on cover |
| Example 4 | 4+ | 47 | 61% | 3 | Very good |
| Example 5 | 4 | 45 | 60% | 4 | Minor mark on cover |
| Example 6 | 4+ | 46 | 59% | 2 | Very good |
| Example 7 | 4 | 48 | 61% | 3 | Minor mark on cover |
| Example 8 | 4+ | 46 | 56% | 2 | Very good |
| Example 9 | 4 | 47 | 59% | 2 | Minor mark on cover |
| Example 10 | 3∼4 | 46 | 51% | 8 | Small cut on cover |
| Example 11 | 3 | 45 | 45% | 7 | Small cut on cover |
| Example 12 | 3 | 45 | 42% | 8 | Minot cut on cover |
| Example 13 | 4+ | 47 | 56% | 2 | Very good |
| Example 14 | 4+ | 48 | 58% | 2 | Very good |
| Comparative Ball Example 1 | 0 | 47 | 52% | 6 | Cover material removed |
| Comparative Ball Example 2 | 0 | 45 | 40% | 9 | Cover material removed |
| Comparative Ball Example 3 | 1 | 47 | 38% | 9 | Deep cut on covers |
| Comparative Ball Example 4 | 1 | 48 | 46% | 5 | Deep cut on covers |
| Titleist PRO V1 | 3∼4 | | | 2 | minor cut on cover |
| Callaway HX Tour | 4 | | | 2 | Minor mark on cover |

## Claims

1. A golf ball comprising a core and a cover, said cover comprising a polyurea elastomer comprising the reaction product of
at least one amine curing agent with a polyisocyanate composition wherein the isocyanate composition comprises
an isocyanate terminated prepolymer comprising at least one first polyisocyanate with a reactivity greater than that of 4,4'-methylene bis(cyclohexyl) isocyanate and functionality of 1.7 to 2.3 and
at least one amine-terminated compound having a molecular weight greater than 1000 selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof; and
at least one second polyisocyanate with a vapor pressure lower than 0.01 mmHg (1.3 Pa) at 20°C.

2. A golf ball comprising a core and a cover, said cover comprising a poly(urethane-co-urea) elastomer comprising the reaction product of a hydroxyl curing agent with a polyisocyanate composition wherein the isocyanate composition is
an isocyanate terminated prepolymer comprising at least one first polyisocyanate with a reactivity greater than that of 4,4'-methylene bis(cyclohexyl) isocyanate and functionality of 1.7 to 2.2 and at least one amine-terminated compound having a molecular weight greater than 1000 selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof; and
at least one second polyisocyanate with a vapor pressure lower than 0.01 mmHg (1.3 Pa) at 20°C.

3. A golf ball comprising:
a core;
a layer disposed about the core to create an inner ball; and
a cover cast onto the inner ball, wherein the cover comprises a polyurea elastomer comprising the reaction product of at least one amine curing agent and an isocyanate composition comprising
an isocyanate terminated prepolymer comprising the reaction product of at least one first polyisocyanate, wherein the polyisocyanate has reactivity greater than that of 4,4'-methylene bis(cyclohexyl) isocyanate and functionality of 1.7 to 2.3, and at least one amine-terminated compound, wherein the amine-terminated compound is selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof;
and at least one second isocyanate with vapor pressure lower than 0.01 mmHg (1.3 Pa) at 20°C.

4. A golf ball comprising:
a core;
a layer disposed about the core to create an inner ball; and
a cover cast onto the inner ball, wherein the cover comprises a poly(urethane-co-urea) elastomer comprising the reaction product of at least one hydroxyl-terminated curing agent and an isocyanate composition comprising
an isocyanate terminated prepolymer comprising the reaction product of at least one first polyisocyanate, wherein the polyisocyanate has reactivity greater than that of 4,4'-methylene bis(cyclohexyl) isocyanate and functionality of 1.7 to 2.3, and at least one amine-terminated compound, wherein the amine-terminated compound is selected from the group consisting of amine-terminated hydrocarbons, amine-terminated polyethers, amine-terminated polyesters, amine-terminated polycaprolactones, amine-terminated polycarbonates, amine-terminated polyamides, and mixtures thereof;
and at least one second isocyanate with vapor pressure lower than 0.01 mmHg (1.3 Pa) at 20°C.

5. The golf ball of any one of claims 1 to 4 wherein the weight ratio of prepolymer to the second isocyanate is from 10:90 to 98:2.

6. The golf ball of any one of claims 1 to 4 wherein the first polyisocyanate has a reactivity of greater than that of isophorone diisocyanate.

7. The golf ball of any one of the preceding claims wherein the amine-terminated compound comprises primary amines, secondary amines, triamines, or combinations thereof.

8. The golf ball of any one of the preceding claims wherein the cover has a thickness of 0.02 inches (0.05 cm) to 0.035 inches (0.089 cm).

9. The golf ball of any one of the preceding claims wherein the cover has a Shore D hardness of 40 to 60.

10. The golf ball of claim 3 or 4 wherein the layer has a first Shore D hardness and the cover has a second Shore D hardness of 40 to 60, and wherein the ratio of second Shore D hardness to the first Shore D hardness is 0.7 or less.

11. The golf ball of any one of claims 1 to 4 wherein the cover has a resilience greater than 40% measured by Bashore rebound.

12. The golf ball of any one of claim 1 to 4 wherein the amine-terminated curing agent is an alkylated aromatic diamine or alkylated methylene dianiline.

13. The golf ball of any one of claims 1 to 4 where the first polyisocyanate is an aromatic isocyanate and the second polyisocyanate is an aromatic isocyanate.

14. The golf ball of any one of claims 1 to 4 wherein the first polyisocyanate is an aromatic polyisocyanate and the second polyisocyanate is a dimer, trimer or a mixture thereof of an aliphatic polyisocyanate.

15. The golf ball of any one of claims 1 to 4 wherein the first polyisocyanate is an aliphatic isocyanate and the second polyisocyanate is an aromatic isocyanate.

## Patentansprüche

1. Ein Golfball, der einen Kern und einen Überzug beinhaltet, wobei der Überzug ein Polyharnstoffelastomer beinhaltet, das das Reaktionsprodukt von Folgendem beinhaltet:
mindestens einem Aminhärtungsmittel mit einer Polyisocyanatzusammensetzung,
wobei die Isocyanatzusammensetzung Folgendes beinhaltet:
ein Isocyanat-terminiertes Vorpolymer, das mindestens ein erstes Polyisocyanat mit einer größeren Reaktivität als der von 4, 4'-Methylen-bis(cyclohexyl)-isocyanat und
einer Funktionalität von 1,7 bis 2,3 beinhaltet und
mindestens eine Amin-terminierte Verbindung mit einem Molekulargewicht von mehr als 1000, ausgewählt aus der Gruppe, bestehend aus Amin-terminierten Kohlenwasserstoffen, Amin-terminierten Polyethern, Amin-terminierten Polyestern, Amin-terminierten Polycaprolactonen, Amin-terminierten Polycarbonaten, Amin-terminierten Polyamiden und Mischungen daraus; und
mindestens einem zweiten Polyisocyanat mit einem Dampfdruck von weniger als 0,01 mmHg (1,3 Pa) bei 20 °C.

2. Ein Golfball, der einen Kern und einen Überzug beinhaltet, wobei der Überzug ein Poly(urethan-co-harnstoff)-Elastomer beinhaltet, das das Reaktionsprodukt von einem Hydroxylaushärtungsmittel mit einer Polyisocyanatzusammensetzung beinhaltet, wobei die Isocyanatzusammensetzung Folgendes ist:
ein Isocyanat-terminiertes Vorpolymer, das mindestens ein erstes Polyisocyanat mit einer größeren Reaktivität als der von 4,4'-Methylen-bis(cyclohexyl)-isocyanat und einer Funktionalität von 1,7 bis 2,2 beinhaltet, und mindestens eine Amin-terminierte Verbindung mit einem Molekulargewicht von mehr als 1000, ausgewählt aus der Gruppe bestehend aus Amin-terminierten Kohlenwasserstoffen, Amin-terminierten Polyethern, Amin-terminierten Polyestern, Amin-terminierten Polycaprolactonen, Amin-terminierten Polycarbonaten, Amin-terminierten Polyamiden und Mischungen daraus; und
mindestens einem zweiten Polyisocyanat mit einem Dampfdruck von weniger als 0,01 mmHg (1,3 Pa) bei 20 °C.

3. Ein Golfball, der Folgendes beinhaltet:
einen Kern;
eine um den Kern angeordnete Schicht, um einen inneren Ball zu erzeugen; und
einen auf den inneren Ball gegossenen Überzug, wobei der Überzug ein Polyharnstoffelastomer beinhaltet, das das Reaktionsprodukt von mindestens einem Aminhärtungsmittel und einer Isocyanatzusammensetzung beinhaltet, beinhaltend ein Isocyanat-terminiertes Vorpolymer, das das Reaktionsprodukt von mindestens einem ersten Polyisocyanat, wobei das Polyisocyanat eine Reaktivität, die größer als die von 4,4'-Methylen-bis(cyclohexyl)-isocyanat ist, und eine Funktionalität von 1,7 bis 2,3 aufweist, und mindestens einer Amin-terminierten Verbindung beinhaltet, wobei die Amin-terminierte Verbindung aus der Gruppe ausgewählt ist, die aus Amin-terminierten Kohlenwasserstoffen, Amin-terminierten Polyethern, Amin-terminierten Polyestern, Amin-terminierten Polycaprolactonen, Amin-terminierten Polycarbonaten, Amin-terminierten Polyamiden und Mischungen daraus besteht;
und mindestens ein zweites Isocyanat mit einem Dampfdruck von weniger als 0,01 mmHg (1,3 Pa) bei 20 °C.

4. Ein Golfball, der Folgendes beinhaltet:
einen Kern;
eine um den Kern angeordnete Schicht, um einen inneren Ball zu erzeugen; und
einen auf den inneren Ball gegossenen Überzug, wobei der Überzug ein Poly(urethan-co-harnstoff)-Elastomer beinhaltet, das das Reaktionsprodukt von mindestens einem Hydroxyl-terminierten Aushärtungsmittel und einer Isocyanatzusammensetzung beinhaltet, beinhaltend
ein Isocyanat-terminiertes Vorpolymer, das das Reaktionsprodukt von mindestens einem ersten Polyisocyanat, wobei das Polyisocyanat eine Reaktivität, die größer als die von 4,4'-Methylen-bis(cyclohexyl)-isocyanat ist, und eine Funktionalität von 1,7 bis 2,3 aufweist, und mindestens einer Amin-terminierten Verbindung beinhaltet, wobei die Amin-terminierte Verbindung aus der Gruppe ausgewählt ist, die aus Amin-terminierten Kohlenwasserstoffen, Amin-terminierten Polyethern, Amin-terminierten Polyestern, Amin-terminierten Polycaprolactonen, Amin-terminierten Polycarbonaten, Amin-terminierten Polyamiden und Mischungen daraus besteht;
und mindestens ein zweites Isocyanat mit einem Dampfdruck von weniger als 0,01 mmHg (1,3 Pa) bei 20 °C.

5. Golfball gemäß einem der Ansprüche 1 bis 4, wobei das Gewichtsverhältnis von Vorpolymer zu dem zweiten Isocyanat von 10:90 bis 98:2 beträgt.

6. Golfball gemäß einem der Ansprüche 1 bis 4, wobei das erste Polyisocyanat eine Reaktivität von größer als der von Isophorondiisocyanat aufweist.

7. Golfball gemäß einem der vorangehenden Ansprüche, wobei die Amin-terminierte Verbindung primäre Amine, sekundäre Amine, Triamine oder Kombinationen daraus beinhaltet.

8. Golfball gemäß einem der vorangehenden Ansprüche, wobei der Überzug eine Dicke von 0,02 Zoll (0,05 cm) bis 0,035 Zoll (0,089 cm) aufweist.

9. Golfball gemäß einem der vorangehenden Ansprüche, wobei der Überzug eine Shore D-Härte von 40 bis 60 aufweist.

10. Golfball gemäß Anspruch 3 oder 4, wobei die Schicht eine erste Shore D-Härte aufweist und der Überzug eine zweite Shore D-Härte von 40 bis 60 aufweist, und wobei das Verhältnis von zweiter Shore D-Härte zu erster Shore D-Härte 0,7 oder weniger ist.

11. Golfball gemäß einem der Ansprüche 1 bis 4, wobei der Überzug eine Elastizität von mehr als 40 % aufweist, gemessen durch Bashore-Rebound.

12. Golfball gemäß einem der Ansprüche 1 bis 4, wobei das Amin-terminierte Aushärtungsmittel ein alkyliertes aromatisches Diamin oder alkyliertes Methylendianilin ist.

13. Golfball gemäß einem der Ansprüche 1 bis 4, wobei das erste Polyisocyanat ein aromatisches Isocyanat ist und das zweite Polyisocyanat ein aromatisches Isocyanat ist.

14. Golfball gemäß einem der Ansprüche 1 bis 4, wobei das erste Polyisocyanat ein aromatisches Polyisocyanat ist und das zweite Polyisocyanat ein Dimer, Trimer oder eine Mischung daraus von einem aliphatischen Polyisocyanat ist.

15. Golfball gemäß einem der Ansprüche 1 bis 4, wobei das erste Polyisocyanat ein aliphatisches Isocyanat ist und das zweite Polyisocyanat ein aromatisches Isocyanat ist.

## Revendications

1. Une balle de golf comprenant un coeur et une enveloppe, ladite enveloppe comprenant
un élastomère polyurée comprenant le produit de la réaction
d'au moins un agent de vulcanisation amine avec une composition polyisocyanate, la composition isocyanate comprenant
un prépolymère à terminaison isocyanate comprenant au moins un premier polyisocyanate avec une réactivité supérieure à celle de l'isocyanate de 4,4'-méthylène bis(cyclohexyl) et une fonctionnalité allant de 1,7 à 2,3 et
au moins un composé à terminaison amine ayant une masse moléculaire supérieure à 1 000 sélectionné dans le groupe consistant en hydrocarbures à terminaison amine, polyéthers à terminaison amine, polyesters à terminaison amine, polycaprolactones à terminaison amine, polycarbonates à terminaison amine, polyamides à terminaison amine, et des mélanges de ceux-ci ; et
au moins un deuxième polyisocyanate avec une pression de vapeur inférieure à 0,01 mmHg (1,3 Pa) à 20 °C.

2. Une balle de golf comprenant un coeur et une enveloppe, ladite enveloppe comprenant
un élastomère poly(uréthane-co-urée) comprenant le produit de la réaction d'un agent de vulcanisation hydroxyle avec une composition polyisocyanate, la composition isocyanate étant
un prépolymère à terminaison isocyanate comprenant au moins un premier polyisocyanate avec une réactivité supérieure à celle de l'isocyanate de 4,4'-méthylène bis(cyclohexyl) et une fonctionnalité allant de 1,7 à 2,2 et au moins un composé à terminaison amine ayant une masse moléculaire supérieure à 1 000 sélectionné dans le groupe consistant en hydrocarbures à terminaison amine, polyéthers à terminaison amine, polyesters à terminaison amine, polycaprolactones à terminaison amine, polycarbonates à terminaison amine, polyamides à terminaison amine, et des mélanges de ceux-ci ; et
au moins un deuxième polyisocyanate avec une pression de vapeur inférieure à 0,01 mmHg (1,3 Pa) à 20 °C.

3. Une balle de golf comprenant :
un coeur ;
une couche disposée autour du coeur afin de créer une balle interne ; et
une enveloppe coulée sur la balle interne, l'enveloppe comprenant un élastomère polyurée comprenant le produit de la réaction d'au moins un agent de vulcanisation amine et une composition isocyanate comprenant
un prépolymère à terminaison isocyanate comprenant le produit de la réaction d'au moins un premier polyisocyanate, le polyisocyanate ayant une réactivité supérieure à celle de l'isocyanate de 4,4'-méthylène bis(cyclohexyl) et une fonctionnalité allant de 1,7 à 2,3, et au moins un composé à terminaison amine, le composé à terminaison amine étant sélectionné dans le groupe consistant en hydrocarbures à terminaison amine, polyéthers à terminaison amine, polyesters à terminaison amine, polycaprolactones à terminaison amine, polycarbonates à terminaison amine, polyamides à terminaison amine, et des mélanges de ceux-ci ;
et au moins un deuxième isocyanate avec une pression de vapeur inférieure à 0,01 mmHg (1,3 Pa) à 20 °C.

4. Une balle de golf comprenant :
un coeur ;
une couche disposée autour du coeur afin de créer une balle interne ; et
une enveloppe coulée sur la balle interne, l'enveloppe comprenant un élastomère poly(uréthane-co-urée) comprenant le produit de la réaction d'au moins un agent de vulcanisation à terminaison hydroxyle et une composition isocyanate comprenant un prépolymère à terminaison isocyanate comprenant le produit de la réaction d'au moins un premier polyisocyanate, le polyisocyanate ayant une réactivité supérieure à celle de l'isocyanate de 4,4'-méthylène bis(cyclohexyl) et une fonctionnalité allant de 1,7 à 2,3, et au moins un composé à terminaison amine, le composé à terminaison amine étant sélectionné dans le groupe consistant en hydrocarbures à terminaison amine, polyéthers à terminaison amine, polyesters à terminaison amine, polycaprolactones à terminaison amine, polycarbonates à terminaison amine, polyamides à terminaison amine, et des mélanges de ceux-ci ;
et au moins un deuxième isocyanate avec une pression de vapeur inférieure à 0,01 mmHg (1,3 Pa) à 20 °C.

5. La balle de golf de l'une quelconque des revendications 1 à 4, dans laquelle le rapport en poids du prépolymère au deuxième isocyanate va de 10/90 à 98/2.

6. La balle de golf de l'une quelconque des revendications 1 à 4, dans laquelle le premier polyisocyanate a une réactivité supérieure à celle du diisocyanate d'isophorone.

7. La balle de golf de l'une quelconque des revendications précédentes, dans laquelle le composé à terminaison amine comprend des amines primaires, des amines secondaires, des triamines, ou des combinaisons de celles-ci.

8. La balle de golf de l'une quelconque des revendications précédentes dans laquelle l'enveloppe a une épaisseur allant de 0,02 pouce (0,05 cm) à 0,035 pouce (0,089 cm).

9. La balle de golf de l'une quelconque des revendications précédentes dans laquelle l'enveloppe a une dureté Shore D allant de 40 à 60.

10. La balle de golf de la revendication 3 ou de la revendication 4, dans laquelle la couche a une première dureté Shore D et l'enveloppe a une deuxième dureté Shore D allant de 40 à 60, et dans laquelle le rapport de la deuxième dureté Shore D à la première dureté Shore D est de 0,7 ou moins.

11. La balle de golf de l'une quelconque des revendications 1 à 4, dans laquelle l'enveloppe a une résilience supérieure à 40 % mesurée par rebondissement Bashore.

12. La balle de golf de l'une quelconque des revendications 1 à 4, dans laquelle l'agent de vulcanisation à terminaison amine est une diamine aromatique alkylée ou une méthylène dianiline alkylée.

13. La balle de golf de l'une quelconque des revendications 1 à 4 où le premier polyisocyanate est un isocyanate aromatique et le deuxième polyisocyanate est un isocyanate aromatique.

14. La balle de golf de l'une quelconque des revendications 1 à 4, dans laquelle le premier polyisocyanate est un polyisocyanate aromatique et le deuxième polyisocyanate est un dimère, trimère ou un mélange de ceux-ci d'un polyisocyanate aliphatique.

15. La balle de golf de l'une quelconque des revendications 1 à 4, dans laquelle le premier polyisocyanate est un isocyanate aliphatique et le deuxième polyisocyanate est un isocyanate aromatique.
